# EUROPÄISCHE PATENTSCHRIFT

(11) **EP 3 259 044 B1**
(45) Veröffentlichungstag und Bekanntmachung des Hinweises auf die Patenterteilung: **02.09.2020**
(21) Anmeldenummer: 16716153.8
(22) Anmeldetag: 11.02.2016
(51) Int. Cl.: B01D 46/00, B01D 46/02

(54) **VORRICHTUNG ZUM FILTRIEREN VON VERUNREINIGTER LUFT**
DEVICE FOR FILTERING CONTAMINATED AIR
DISPOSITIF POUR LE FILTRAGE D'AIR VICIÉ

(30) Priorität: 16.02.2015 DE 102015001821; 13.11.2015 DE 102015014598
(43) Veröffentlichungstag der Anmeldung: 27.12.2017
(73) Patentinhaber: Wenker GmbH & Co. Kg, 48683 Ahaus (DE)
(72) Erfinder: LEERS, Franz, 48683 Ahaus (DE)
(74) Vertreter: Reichert, Christian
(86) Internationale Anmeldenummer: PCT/DE2016/000045
(87) Internationale Veröffentlichungsnummer: WO 2016/131436

(56) Entgegenhaltungen:
- EP-A1- 1 870 153
- DE-A1- 2 814 803
- DE-A1- 3 935 483
- DE-B- 1 195 554
- US-A- 3 823 532

## Beschreibung

Die vorliegende Erfindung betrifft eine Vorrichtung zum Filtrieren von verunreinigter Luft, insbesondere zum Filtrieren der verunreinigten Luft in oder aus Lackieranlagen, mit den Merkmalen des Oberbegriffs des Patentanspruchs 1.

Vorrichtungen mit den Merkmalen des Oberbegriffs des Patentanspruchs 1 sind bekannt und werden insbesondere im Bereich der Kfz-Herstellung oder der Kfz-Reparatur und dort vorzugsweise zum Filtrieren der verunreinigten Luft, die bei Lackierarbeiten und den der Lackierarbeiten vorgelagerten Spachtel- und Schleifarbeiten vielfach verwendet.

So befindet sich beispielsweise eine Vorrichtung zum Filtrieren bei Lackieranlagen im industriellen Einsatz, die in der jeweiligen Lackierkabine mit Abstand vor einer Seitenwand positioniert ist und eine Vielzahl von austauschbaren Filtermodulen, die von einer regalähnlichen Halterungseinrichtung, die auch als Filterwand bezeichnet wird, gehaltert werden, aufweist, wobei die zu reinigende verunreinigte Abluft durch die bei der bekannten Vorrichtung vorhandenen Filtermodule aus der Lackierkabine abgezogen wird. Hinter der bekannten Filtriervorrichtung ist ein Revisionsgang vorgesehen, über den die mit Verunreinigungen beladenen Papier-Filtermodule zusammen mit einem jedes Filtermodul aufnehmenden Pappkartons, ausgetauscht werden. Bei einem derartigen Austausch muß jedoch die Absaugung der verunreinigten Luft aus der Lackierkabine unterbrochen werden.

Ähnlich arbeitet ein anderes, in der Praxis verwendetes System, bei dem unterhalb der Lackieranlage die Vorrichtung zum Filtrieren von verunreinigter Luft angeordnet ist. Diese Abscheidevorrichtung umfaßt eine Vielzahl von ebenfalls in Pappkartons angeordneten Filtermodulen aus Papier, durch die die aus der Lackierkabine abgezogene verunreinigte Luft abgesaugt wird. Zum Wechsel der Filtermodule ist es jedoch auch bei dieser bekannten Vorrichtung erforderlich, daß der aus der Lackierkabine abgesaugte Abluftstrom über eine Motorklappe abgetrennt wird, so daß dementsprechend nur während einer regelmäßig zu erfolgenden Betriebspause die Filtermodule gewechselt werden können.

Oftmals tritt jedoch dabei beim Auswechseln der Pappkartons die Situation auf, daß das auszutauschende, mit Verunreinigungen beladene Filtermodul derart verschmutzt ist, daß der Karton beim Austausch teilweise oder vollständig zerstört wird und dementsprechend die aus diesem Karton herausfallenden oder heraustropfenden Verunreinigungen zusätzlich, teilweise recht aufwendig entfernt werden müssen. Diese Situation wird häufig beim Austausch von solchen konventionellen Filtermodulen beobachtet, die zur Abscheidung von Overspray eingesetzt werden, wobei der Begriff Overspray den Anteil des Lackes bezeichnet, der beim Lackieren nicht in gewünschter Weise auf das zu lackierende Teil gelangt und somit über die Abluft als Verunreinigung aus der Lackieranlage abgeführt wird. Vielfach handelt es sich hierbei um wässrige Lacksysteme, die aufgrund ihrer relativ hohen Wasseranteile zu einer sehr raschen Quellung und Zerstörung des konventionellen Filtermodulkartons führen und im erhöhten Maße die zuvor beschriebenen Probleme beim Austausch, Transport und/oder Entsorgung der mit Verunreinigungen beladenen Filterkartons verursachen. Insgesamt ist somit die Verwendung und der Austausch sowie die Entsorgung der herkömmlichen, in Pappkartons angeordneten Filtermodule aufgrund der zuvor geschilderten Schwierigkeiten sehr problematisch, zeitaufwendig und somit auch kostenintensiv.

Weiterhin kann bei Verwendung der herkömmlichen Filtermodule oftmals festgestellt werden, daß im Bereich der Eintrittsseite der verunreinigten Luft ein Teil des Pappkartons oder des Filtermediums, beispielsweise durch abgelagerte Lackpartikel, mit dem zugeordneten Bereich der Filterwand verklebt ist, so daß diese Verklebung aufwendig manuell gelöst werden muß, bevor das innerhalb der Pappkartons vorgesehene vorzugsweise wellenförmig angeordnete, beladene Filtermedium zusammen mit dem beschädigten Pappkarton ausgetauscht werden kann. Dies bewirkt oftmals eine Zerstörung oder Beschädigung des Pappkartons mit der Folge, daß unerwünschte weitere Verschmutzungen der Filterwand und der hiermit verbundenen Lackieranlage auftreten.

Desweiteren beschreibt beispielsweise die DE 1 195 554 eine Wechselfiltereinrichtung insbesondere in mit Schweröl betriebenen Brennkammern von Gasturbinen, wobei das Wechselfilter ein Kreisringfilter ist, das um eine parallel zur Rohrachse außerhalb des Rohres gelegene Achse drehbar ist.

Der vorliegenden Erfindung liegt die Aufgabe zugrunde, eine Vorrichtung zum Filtrieren von verunreinigter Luft, insbesondere zum Filtrieren der verunreinigten Luft in oder aus Lackieranlagen, zur Verfügung zu stellen, die es ermöglicht, mit Verunreinigungen beladene Filter in besonders einfacher Weise durch nicht beladene Filter auszutauschen, ohne daß hierfür ein Unterbrechen der Abscheidung von Verunreinigungen aus der Luft erforderlich wird.

Diese Aufgabe wird erfindungsgemäß durch eine Vorrichtung zum Filtrieren von verunreinigter Luft mit den kennzeichnenden Merkmalen des Patentanspruchs 1 gelöst.

Die erfindungsgemäße Vorrichtung zum Filtrieren von verunreinigter Luft, insbesondere zum Filtrieren der verunreinigten Luft in oder aus Lackieranlagen, weist ein Gehäuse auf, das mit einem Zuführbereich für die verunreinigte Luft, mit einem von dem Zuführbereich abgetrennten Abführbereich für die gereinigte Luft, mit mindestens einer von außen zugänglichen Öffnung und mit mindestens einer Halterungseinrichtung für mindestens zwei Filteranordnungen versehen ist, wobei jede Filteranordnung mindestens ein Filter aufweist. Erfindungsgemäß wird vorgeschlagen, daß die Halterungseinrichtung zwischen einer ersten Betriebsstellung und einer zweiten Betriebsstellung und umgekehrt hierzu bewegbar ist, daß in der ersten Betriebsstellung der Halterungseinrichtung die verunreinigte Luft die Filter der mindestens zwei Filteranordnungen durchströmt und daß in der zweiten Betriebsstellung der Halterungseinrichtung die verunreinigte Luft das mindestens eine Filter der mindestens einen Filteranordnung durchströmt, während gleichzeitig das mindestens eine, mit abfiltrierten Verunreinigungen beladene Filter der mindestens einen anderen Filteranordnung durch die von außen zugängliche mindestens eine Öffnung in dem ansonsten geschlossenen Gehäuse entnehmbar und durch mindestens ein, mit abfiltrierten Verunreinigungen nicht beladenes Filter ersetzbar ist.

Die erfindungsgemäße Vorrichtung erlaubt somit ein Wechsel des beladenen Filters ohne daß es hierzu erforderlich ist, daß der Filtrierprozess dabei unterbrochen wird, da das mindestens eine andere Filter zum Zeitpunkt des Austauschs des beladenen Filters weiterhin die verunreinigte Luft filtriert.

Ein unerwünschtes Austreten von verunreinigter Luft beim Austausch des mindestens einen, mit Verunreinigungen beladenen Filters durch die von außen zugängliche Öffnung im Gehäuse wird einerseits dadurch verhindert, daß das mindestens eine andere Filter nach wie vor die verunreinigte Luft filtriert und daß der Zuführbereich für die verunreinigte Luft von dem Abführbereich für die gereinigte Luft getrennt voneinander vorgesehen sind, wobei vorzugsweise bei der erfindungsgemäßen Vorrichtung die Luftführung derartig gestaltet wird, daß in Strömungsrichtung der zu filtrierenden verunreinigten Luft gesehen stromab der mindestens zwei Filter die gereinigte Luft über ein entsprechendes Saugebläse abgezogen wird, so daß bei einem Wechsel des beladenen Filters zumindest in dem Bereich der in dem Gehäuse vorgesehenen Öffnung ein geringer Sog entsteht, der den Austritt von verunreinigter Luft verhindert. Filtrieren in der zweiten Betriebsstellung jedoch die mindestens zwei Filter gleichzeitig die verunreinigte Luft, so vergrößert sich der zuvor angesprochene Sog mit der Folge, daß ebenfalls durch die im Gehäuse vorgesehene Öffnung keine mit Verunreinigungen beladene Luft in die Umgebungsatmosphäre austreten kann.

Als weiterer Vorteil der erfindungsgemäßen Vorrichtung zum Filtrieren von verunreinigter Luft ist festzuhalten, daß die erfindungsgemäße Vorrichtung im Vergleich zu den zuvor angesprochenen bekannten Vorrichtungen bei einer besonders kompakten Bauweise eine erheblich größere Anzahl von Filtern und/oder größere Filter ermöglicht, wie dies nachfolgend noch anhand von bevorzugten Ausführungsformen der erfindungsgemäßen Vorrichtung näher erläutert wird. Hieraus wird wiederum verständlich, daß die erfindungsgemäße Vorrichtung nicht nur besonders wirtschaftlich zu betreiben sondern insbesondere auch individuell auf den jeweiligen Bedarf, d.h. der Menge der pro Zeiteinheit abzuscheidenden Verunreinigungen, anzupassen ist.

Verunreinigungen im Sinne der vorliegenden Anmeldung sind insbesondere die beim Schleifen, Lackieren oder Polieren von Werkstücken anfallenden Schleif-, Lack- und/oder Polierpartikel sowie Nebel und/oder Aerosole dieser Partikel, wie sie beispielsweise bei der Herstellung von Fahrzeugen oder bei der Reparatur derselben anfallen und in die Luft gelangen und dementsprechend als verunreinigte Luft bezeichnet werden. Durch Reinigung dieser verunreinigten Luft durch die erfindungsgemäße Filtervorrichtung, d.h. durch Entfernen der vorstehend beispielhaft genannten Partikel, Nebel oder Aerosole dieser Partikel mittels der hier beanspruchten erfindungsgemäßen Vorrichtung entsteht filtrierte oder gereinigte Luft.

Die in der vorliegenden Anmeldung desweiteren benutzen Begriffe stromab und stromauf beziehen sich auf die Strömungsrichtung der verunreinigten Luft oder nachdem diese verunreinigte Luft das bzw. die Filter passiert hat, auf die Strömungsrichtung der gereinigten Luft.

Desweiteren deckt der in der vorliegenden Beschreibung verwendete Begriff "und/oder" sowohl additiv als auch alternativ die so verknüpften einzelnen Elemente einer Aufzählung ab, so daß diese Elemente wahlweise mit "und" bzw. mit "oder" verknüpft zu verstehen sind. Ferner umfassen die im Singular verwendeten Begriffe selbstverständlich auch den Plural und die im Plural verwendeten Begriffe den Singular.

Ferner deckt der Begriff Filter alle Elemente ab, die geeignet sind, aus einem Gasstrom die darin enthaltenen Verunreinigungen, wie sie zuvor beispielhaft beschrieben sind, abzuscheiden unabhängig von ihrer Bauweise, dem jeweiligen Filtermedium, ihrer Dimension oder dem vom Filter erzielten Filterwirkungsgrad für die jeweiligen Verunreinigungen. Als Filtermodul wird im Rahmen der vorliegenden Anmeldung ein in einem Gehäuse oder einem Grundkörper angeordnetes, vorzugsweise bezüglich seiner Abmessungen standardisiertes Filter bezeichnet, das insbesondere mit einem oder mehreren Filtermedien versehen ist, die identische oder unterschiedliche Abscheidungscharakteristiken und Filterwirkungsgrade für die jeweilige Verunreinigung aufweisen.

Wasserfeste Materialien im Sinne der vorliegenden Beschreibung sind alle solche Materialien, die bei vollständiger Durchnässung mit Wasser, einem Lösungsmittel, wie es insbesondere beim Lackieren oder Beschichten angewendet wird und somit als Verunreinigung anfällt, oder einer wasserhaltigen oder lösungsmittelhaltigen Flüssigkeit noch mindestens 50 % seiner Festigkeit, insbesondere seiner Zugfestigkeit, bezogen auf die Ausgangsfestigkeit und insbesondere auf seine Ausgangszugfestigkeit im trockenen Zustand besitzt.

Sollte der zuvor bei der erfindungsgemäßen Vorrichtung beschriebene Sog zusätzliche Strömungsgeräusche verursachen, zu unerwünschten Zugerscheinungen in der Nähe der im Gehäuse vorgesehenen von außen zugänglichen Öffnung verursachen oder der jeweiligen Benutzer verhindern will, daß die erfindungsgemäße Vorrichtung auch für unbefugte Personen zugänglich ist, sieht eine besonders vorteilhafte Weiterbildung der erfindungsgemäßen Vorrichtung vor, daß hierbei die von außen zugängliche Öffnung im Gehäuse mit einem Türelement, vorzugsweise einem verschiebbaren Türelement, versehen ist, so daß das Gehäuse in der ersten Betriebsstellung der Halterungseinrichtung durch das Türelement verschlossen ist. Sofern erwünscht oder der jeweilige Betreiber der erfindungsgemäßen Vorrichtung es für erforderlich hält, kann das Türelement zusätzlich noch mit Dichtungen versehen sein, die beispielsweise so ausgebildet sind, daß sie in der zweiten Betriebsstellung der Halterungseinrichtung den Bereich zwischen dem zu ersetzenden beladenen Filter und der Öffnung abdichtet, so daß ein entsprechender Schleusenbereich dort entsteht.

Um die in mindestens zwei Filteranordnungen vorgesehenen Filter lagekorrekt und lösbar an der Halterungseinrichtung zu befestigen, weist eine weitere Ausgestaltung der erfindungsgemäßen Vorrichtung solche Halterungselemente auf, die an der Halterungseinrichtung befestigt sind und die eine lösbare Halterung der in den mindestens zwei Filteranordnungen vorgesehenen Filter bewirken.

Bevorzugt werden jedoch bei der erfindungsgemäßen Filtervorrichtung die an der Halterungseinrichtung angeordneten Halterungselemente derart ausgebildet, daß sie in ihrer Form und/oder Größe an das jeweils zu halternde Filter angepaßt und insbesondere als Rahmenelement oder als Kastenelement ausgebildet ist, wobei das Kastenelement vorzugsweise in beiden Stirnseiten Luftdurchtrittsöffnungen aufweist, so daß die verunreinigte Luft zur Abfiltration der Verunreinigungen das Filter hierüber durchströmen kann. Werden zusätzlich diese Luftdurchtrittsöffnungen noch so ausgestaltet, daß ihrer Querschnittsfläche beeinflußbar ist oder daß über Strömungsleitelemente die Strömungsrichtung veränderbar ist, so lassen sich über derartige Luftdurchtrittsöffnungen die Abscheidungsergebnisse der Filter für den jeweiligen Bedarf optimieren.

Abhängig von der jeweils erforderlichen Filterleistung der erfindungsgemäßen Filtervorrichtung richtet sich die Form und Ausgestaltung der Halterungseinrichtung. Insbesondere ist die Halterungseinrichtung als gerades Prisma oder als Zylinder ausgebildet, das als Grundfläche ein gleichseitiges Vieleck, insbesondere ein Dreieck bis ein Zehneck und vorzugsweise ein Viereck bis ein Achteck, aufweist. Bei dieser Ausgestaltung der Halterungseinrichtung als Prisma weist insbesondere jede Seitenfläche des Primas eine Filteranordnung auf, wobei jede Filteranordnung mindestens ein Filter, vorzugsweise jedoch eine Reihe von übereinander angeordneten Filter umfaßt. Wird hingegen die Halterungseinrichtung als Zylinder ausgebildet, weist diese zylindrische Halterungseinrichtung mindestens zwei Filteranordnungen mit mindestens jeweils einem Filter auf.

Bei diesen beiden, zuvor beschriebenen Halterungseinrichtungen, die als Prisma oder als Zylinder ausgebildet sind, ist es besonders vorteilhaft, wenn mindestens ein Abschnitt eines jeden Filters und/oder mindestens ein Abschnitt eines jedes Halterungselementes der Mantelfläche des Prismas oder der Mantelfläche des Zylinders derart zugeordnet ist, daß über diesen Abschnitt des Filters oder des Halterungselementes bei einem Austausch eines beladenen Filters in der zweiten Betriebsstellung der Halterungseinrichtung manuell erfaßbar und austauschbar ist.

Um die Bewegung der Halterungseinrichtung von der ersten Betriebsstellung in die zweite Betriebsstellung und aus der zweiten Betriebsstellung in die erste Betriebsstellung durchzuführen, sieht eine weitere Ausgestaltung der erfindungsgemäßen Vorrichtung vor, daß hierbei diese Bewegung durch Drehung und/oder durch Verschieben durchgeführt wird, wobei ein Verschieben der Halterungseinrichtung bevorzugt parallel zur Bodenfläche erfolgt.

Eine vorteilhafte Weiterbildung der zuvor beschriebenen Ausführungsform der erfindungsgemäßen Vorrichtung sieht vor, daß die Halterungseinrichtung durch Drehung aus der ersten Betriebsstellung in die zweite Betriebsstellung und aus der zweiten Betriebsstellung in die erste Betriebsstellung bewegbar ist und daß die Halterungseinrichtung zusätzlich noch in eine dritte Betriebsstellung bringbar ist, in der die Halterungseinrichtung mit einer einstellbaren Geschwindigkeit kontinuierlich oder taktweise gedreht wird. Hierdurch wird erreicht, daß alle, in den Filteranordnungen vorgesehenen Filter besonders gleichmäßig mit verunreinigter Luft durchströmt werden, was sich als besonders vorteilhaft dann herausgestellt hat, wenn die verunreinigte Luft einen hohen Anteil an Overspray aufweist. Als Overspray wird in der Fachterminologie der Anteil des aufzutragenden Lackes bezeichnet, der nicht auf das jeweils zu lackierende Werkstück gelangt und dort auch nicht fixiert wird sondern als Verschmutzungen in der verunreinigten Luft vorhanden ist und dort über die erfindungsgemäß Vorrichtung zum Filtrieren entfernt wird.

Eine besonders geeignete und besonders wirtschaftlich zu verwendende Ausgestaltung der erfindungsgemäßen Vorrichtung weist eine solche Halterungseinrichtung auf, die derart dimensioniert und ausgestaltet ist, daß die Halterungseinrichtung über ihre Höhe gesehen mindestens eine erste Filteranordnung mit einer Reihe von übereinander angeordneten Filtern und mindestens eine zweite Filteranordnung mit einer Reihe von übereinander angeordneten Filtern aufweist. Abhängig von der jeweiligen Größe der Halterungseinrichtung und der Anzahl der erforderlichen Filter werden insbesondere solche Halterungseinrichtungen bevorzugt, die zwei bis zwölf Filteranordnungen, vorzugsweise drei bis acht Filteranordnungen, aufweisen. Jede Filteranordnung weist dann, abhängig von der Größe der erforderlichen Filter und der erwünschten Abscheidekapazität an Verunreinigungen, zwischen einem und acht Filter, vorzugsweise zwischen zwei bis sechs Filter, auf, wobei es sich bei diesen Filtern um identische Filter oder insbesondere auch um unterschiedliche Filter mit unterschiedlichen Filtermedien und/oder unterschiedliche Filterwirkungsgrade handelt.

Insbesondere sind die Filteranordnungen bei der erfindungsgemäßen Filtervorrichtung über den Umfang der Halterungseinrichtung symmetrisch verteilt, so daß vorzugsweise nebeneinander vorgesehene Filteranordnungen über nebeneinander liegende Filter, die jeweils auf der selben Höhe positioniert sind, verfügen.

Eine andere Ausführung der erfindungsgemäßen Vorrichtung schlägt vor, daß die Dicke der Wandung der Halterungseinrichtung an die Dicke der jeweiligen Filter angepaßt ist und daß innerhalb der Halterungseinrichtung ein den Abführbereich für gereinigte Luft bildender Kanal angeordnet ist, der mit der Saugseite eines Gebläses verbunden ist, wobei der Zuführbereich für die verunreinigte Luft durch das Gehäuse gebildet ist. Diese Ausführungsform der erfindungsgemäßen Vorrichtung wird insbesondere für solche Filter angewendet, die eine relativ geringe Dicke aufweisen. Hierbei wird die Wandung vorzugsweise nicht aus einem Vollmaterial sondern aus zwei, relativ dünnen, mit Abstand voneinander angeordneten flächigen Wandungselementen ausgebildet, deren Abstand somit der Dicke der Wandung entspricht. Eine Alternative dieser Ausgestaltung sieht vor, daß der den Abführbereich für gereinigte Luft bildende Kanal durch den Innenraum der Halterungseinrichtung selbst gebildet wird, sofern die Befestigung der Filter derart gestaltet ist, daß die verunreinigte Luft ausschließlich durch die Filter in den Innenraum der Halterungseinrichtung gelangen kann.

Bei einer anderen Ausführungsform der erfindungsgemäßen Vorrichtung mit einer zylindrischen Halterungseinrichtung wird die Wandung der Halterungseinrichtung durch einen inneren Hohlzylinder und einen mit Abstand davon angeordneten äußeren Hohlzylinder ausgebildet. Somit bilden bei dieser Ausführungsform im Querschnitt gesehen die Mantelflächen des inneren und äußeren Hohlzylinders konzentrische Kreise. Desweiteren ist der radiale Abstand der beiden Hohlzylinder auf die in Strömungsrichtung der zu filtrierenden Luft gesehene Länge des jeweiligen Filters abgestimmt, so daß die Filter durch den zwischen den beiden Hohlzylindern ausgebildeten Ringraum gehaltert sind. Der Ringraum weist gleichmäßig über seinen Umfang verteilte Halterungselemente für identisch ausgestaltete Filter auf, wobei jedes Filter stirnseitig jeweils zum inneren und äußeren Hohlzylinder mit einer Luftdurchtrittsöffnung versehen ist. Diese Luftdurchtrittsöffnungen fluchten mit den im Mantel des inneren und äußeren Hohlzylinders vorgesehenen Öffnungen. Die gereinigte Luft wird fußseitig über den kopfseitig geschlossenen inneren Hohlzylinder über ein Gebläse abgesaugt. Bei dieser Ausführungsform bildet somit der innere Hohlzylinder den Abführbereich für gereinigte Luft, während der Zuführbereich für die verunreinigte Luft durch das Gehäuse selbst gebildet ist.

Selbstverständlich ist es bei der zuvor beschriebenen Ausführungsform abhängig von den jeweiligen örtlichen Gegebenheiten auch möglich, die gereinigte Luft kopfseitig über den fußseitig geschlossenen inneren Hohlzylinder über das Gebläse abzuziehen.

In Weiterbildung der zuvor beschriebenen Ausführungsform der erfindungsgemäßen Vorrichtung sind dem Ringraum kastenförmige Halterungselemente zugeordnet, deren Anzahl der von den kastenförmigen Halterungselementen gehalterten Filter entspricht. Jedes Halterungselement weist eine geschlossene Decken- und Bodenfläche, zwei gegenüberliegende geschlossene Seitenflächen und zwei, mit den Luftdurchtrittsöffnungen versehene gegenüberliegende Stirnflächen auf, wobei die äußere bogenförmigen Stirnfläche in ihrer Krümmung an die Krümmung der Mantelfläche des äußeren Hohlzylinders und/oder die innere bogenförmige Stirnfläche an die Krümmung der Mantelfläche des inneren Hohlzylinders angepaßt sind. Wahlweise können bei dieser Weiterbildung der erfindungsgemäßen Vorrichtung durch die kastenförmigen Halterungselemente entsprechend an deren Größe und Form angepaßte Filter, Filtermodule oder Filtermedien gehaltert werden, so daß dementsprechend diese Ausgestaltung der erfindungsgemäßen Vorrichtung besonders vielseitig an die jeweiligen Anforderungen bezüglich der Abscheidung von Verunreinigungen angepaßt werden kann.

Eine Weiterbildung der zuvor beschriebenen Ausgestaltung der erfindungsgemäßen Vorrichtung schlägt vor, daß jedes Filter als Filtermodul ausgebildet ist und jedes Filtermodul eine geschlossene Decken- und Bodenfläche, zwei gegenüberliegende geschlossene Seitenflächen und zwei mit Luftdurchtrittsöffnungen versehene gegenüberliegende Stirnflächen aufweist, wobei in Strömungsrichtung der zu filtrierenden Luft gesehen die äußere bogenförmigen Stirnfläche in ihrer Krümmung an die Krümmung der Mantelfläche des äußeren Hohlzylinders und/oder die innere bogenförmige Stirnfläche an die Krümmung der Mantelfläche des inneren Hohlzylinders angepaßt sind. Jedes Filtermodul ist durch die im Ringraum vorgesehene Halterungselemente kraft- und/oder formschlüssig gehaltert, so daß das jeweilige Filtermodul, sobald es beladen ist, einfach und sehr schnell ausgetauscht und durch ein nicht mit Verunreinigungen beladenes Filtermodul ersetzt werden kann.

Bei einer weiteren Ausführungsform der erfindungsgemäßen Vorrichtung ist die zylindrische Halterungseinrichtung durch einen inneren Hohlzylinder mit einem stegartig ausgestalteten Mantel und einen mit gleichem Abstand davon angeordneten äußeren Hohlzylinder ausgebildet. Der radiale Abstand der beiden Hohlzylinder ist auf die Länge der jeweiligen Filter abgestimmt, wobei sich der Begriff Länge auf die Strömungsrichtung der zu filtrierenden verunreinigten Luft bezieht. Die Filter sind in dem zwischen den beiden Hohlzylindern ausgebildeten Ringraum als Taschenfilter angeordnet. Der äußere Hohlzylinder weist gleichmäßig über seinen Umfang verteilte, rahmenförmige Halterungselemente für die identisch ausgestalteten Filter auf. Die rahmenförmigen Halterungselemente bilden den Mantel des äußeren Zylinders aus und sind jeweils mit einer Eintrittsöffnung für verunreinigte Luft versehen, die mit den Öffnungen der Taschenfilter fluchten. Die gereinigte Luft wird fußseitig über den kopfseitig geschlossenen inneren Hohlzylinder abgesaugt. Selbstverständlich ist es bei dieser Ausführungsform ebenso möglich, daß die gereinigte Luft kopfseitig über den fußseitig geschlossenen inneren Hohlzylinder abgesaugt wird. Diese Ausführungsform der zylindrischen Halterungseinrichtung zeichnet sich im Vergleich zu den zuvor beschriebenen Ausführungsformen und den nachfolgend noch beschriebenen beiden weiteren Ausführungsformen dadurch aus, daß sie ein reduziertes Gewicht aufweist.

Bei einer anderen, besonders bevorzugten Ausgestaltung der erfindungsgemäßen Vorrichtung ist die zylindrische Halterungseinrichtung als rundes Scheibenelement ausgebildet und lagert mindestens zwei, als Filtermodule ausgestaltete Filter. Das runde Scheibenelement ist bewegbar, insbesondere drehbar, gelagert ist, wobei mittig auf dem Scheibenelement ein runder Kanal als Abführbereich für gereinigte Luft angeordnet ist. Jedes, als Filtermodul ausgebildete Filter weist eine geschlossene Decken- und Bodenfläche, zwei gegenüberliegende geschlossene Seitenflächen und zwei mit Luftdurchtrittsöffnungen versehene gegenüberliegende Stirnflächen auf, wobei die äußere bogenförmigen Stirnfläche in ihrer Krümmung an die Krümmung des runden Scheibenelements und die innere bogenförmige Stirnfläche an die Krümmung des Kanals angepaßt sind. Ferner weist der Kanal auf der Höhe der inneren bogenförmigen Stirnfläche des Filtermoduls jeweils pro Filtermodul eine Öffnung auf, die mit der Luftdurchtrittsöffnung des jeweiligen Filtermoduls fluchtet. Vorzugsweise wird bei dieser Ausgestaltung der erfindungsgemäßen Vorrichtung die Halterung der Filtermodule auf dem Scheibenelement ausschließlich oder überwiegend durch das Gewicht der Filtermodule bewirkt, so daß diese Ausführungsform der erfindungsgemäßen Vorrichtung eine recht einfache Bauweise und hierdurch bedingt eine geringe Wartungsanfälligkeit besitzt.

Eine andere, im Vergleich zur vorstehend beschriebenen Ausführungsform der erfindungsgemäßen Vorrichtung ist eine noch weiter vereinfachte Ausführungsform und weist eine zylindrische Halterungseinrichtung auf, die als rundes Scheibenelement ausgebildet ist. Mindestens zwei, als Filtermodul ausgebildete Filter sind durch das runde Scheibenelement bewegbar, insbesondere drehbar, gelagert. Jedes als Filtermodul ausgebildete Filter weist eine geschlossene Decken- und Bodenfläche, zwei gegenüberliegende geschlossene Seitenflächen und zwei mit Luftdurchtrittsöffnungen versehene gegenüberliegende Stirnflächen auf. Die äußere, bogenförmigen Stirnfläche ist in ihrer Krümmung an die Krümmung des runden Scheibenelements angepaßt, während die innere Stirnfläche derart geformt ist, daß diese innere Stirnfläche zusammen mit den inneren Stirnflächen von weiteren benachbarten Filtermodulen den als Abführbereich für gereinigte Luft dienenden Kanal ausbildet. Mit anderen Worten verzichtet diese Ausgestaltung der erfindungsgemäßen Vorrichtung im Vergleich zu der zuvor angesprochenen Ausgestaltung der erfindungsgemäßen Vorrichtung auf den mittig auf dem Scheibenelement vorgesehenen Kanal als eigenständiges Bauteil, da der als Abführbereich für gereinigte Luft dienende Kanal durch das Zusammenfügen von Filtermodulen und speziell durch die seitlich aneinanderstoßenden inneren Stirnflächen der benachbarten Filtermodule ausgebildet wird.

Insbesondere weisen die vorstehend beschriebenen Ausführungsformen der erfindungsgemäßen Vorrichtung als Filter solche Filtermodule auf, bei denen die das Gehäuse des Filtermoduls bildenden Flächen aus einem wiederverwendbaren Material, vorzugsweise aus einem Kunststoff, ausgebildet sind. Ein derartiges Kunststoffgehäuse hat den Vorteil, daß ein mit abfiltrierten Verunreinigungen beladenes Filtermodul nach Entfernen und Entsorgen der innerhalb dieses Filtermoduls vorhandenen mit Verunreinigungen beladene Filtermedien, Reinigung und erneuter Bestückung mit unbenutzten Filtermedien als mit Verunreinigungen nicht beladenes Filtermodul insbesondere mehrfach wieder verwendet werden kann, was insbesondere unter Umweltaspekten bevorzugt wird.

Um die zuvor beschriebenen Wiederverwendung des Filtermoduls und insbesondere deren Neubestückung zu vereinfachen, sieht eine weitere Ausgestaltung der erfindungsgemäßen Vorrichtung vor, daß hier Filtermodule verwendet werden, bei denen innerhalb des Filtermoduls Befestigungselemente zur lösbaren Halterung von mindestens einem Filtermedium vorgesehen sind.

Insbesondere dann, wenn die erfindungsgemäße Vorrichtung solche Filtermodule aufweist, bei denen innerhalb des Gehäuses unterschiedlich geformte und/oder angeordnete Filtermedien oder Filtermedien mit unterschiedlichen oder selektiven Filtermedienwirkungsgraden vorgesehen sind, lassen sich hiermit besonders hohe, individuell an die jeweiligen Anforderungen angepaßte Abscheidungsraten für Verunreinigungen erzielen.

Eine Weiterbildung der zuvor beschriebenen Ausführungsformen der erfindungsgemäßen Vorrichtung sieht vor, daß jedes in der zylindrischen Halterungseinrichtung anzuordnende Filter als Taschenfiltermodul ausgebildet ist, wobei jedes Taschenfiltermodul einen aus Metallstegen bestehenden Grundkörper mit einer Bodenfläche, einer Deckenfläche und zwei gegenüberliegenden Seitenflächen aufweist. Die Seitenflächen sind jeweils senkrecht zur Boden- und Deckenfläche angeordnet. Innerhalb eines jeden Grundkörpers ist wenigstens ein Stützelement zur Befestigung und/oder Halterung von wenigstens einem Taschenfilter vorgesehen. Die Öffnung der Taschenfilter sind bei dieser Ausgestaltung so ausgerichtet, daß die verunreinigte Luft zunächst über die Öffnung in das Taschenfilter einströmt, das Filtermedium bzw. die Filtermedien des Taschenfilters unter Abscheidung der Verunreinigungen durchströmt und hiernach als gereinigte Luft aus der Halterungseinrichtung abgezogen wird. Bei dieser Ausgestaltung des Filters läßt sich wahlweise bei einem Filterwechsel das Taschenfiltermodul oder den das Taschenfiltermodul halternden Grundkörper entfernen.

Eine Variante der zuvor beschriebenen Ausführungsform der erfindungsgemäßen Vorrichtung sieht vor, daß die Bodenfläche und Deckenfläche des Grundkörpers an der Eintrittsseite der verunreinigten Luft und/oder an der Austrittsseite der gereinigten Luft bogenförmig gekrümmt ausgebildet ist bzw. sind, wobei die bogenförmige Krümmung an der Eintrittsseite an die Krümmung des Mantels des äußeren Hohlzylinders und/oder die bogenförmige Krümmung an der Austrittsseite an die Krümmung des Mantels des inneren Hohlzylinders angepaßt ist bzw. sind, wodurch die für die Filtration zur Verfügung stehenden Fläche entsprechend vergrößert ist.

Insbesondere weist das in der erfindungsgemäßen Vorrichtung verwendete Filtermodul ein Stützelement für das Taschenfilter mit einem U-förmigen, einem Omega-förmigen oder einem V-förmigen Querschnitt auf und ist aus Metallstegen ausgebildet. Metallstege im vorstehenden Sinne sind insbesondere runde Stege mit einem Durchmesser zwischen 1,5 mm und 4 mm und bestehen vorzugsweise aus einem korrosionsfesten Metall oder aus einem Metall, das mit einem korrosionsfesten Überzug versehen ist.

Um eine Aussteifung des Stützelementes zu bewirken, ist dieses mit senkrechten auf der Bodenfläche und/oder an der Deckenfläche angeordneten und mit dauerhaft befestigten gitterartigen Metallstegen versehen.

Bezüglich der Halterung der Taschenfilter an den Stützelementen, bestehen mehrere Möglichkeiten. So können diese Taschenfilter bevorzugt über Distanzelemente, die zwischen benachbarten Stützelementen lösbar anzuordnen sind, kraft- und/oder formschlüssig gehaltert werden. Vorzugsweise bestehen diese Stützelemente aus entsprechend geformten Kartonstreifen oder Kartonstegen, die bei einem Austausch der verunreinigten Taschenfilter dann verworfen werden. Alternativ hierzu können die Taschenfilter an den Stützelementen lösbar, beispielsweise durch Kunststoffstreifen, so z.B. Kabelbinder und/oder Clips, oder durch eine Schnur, befestigt werden.

Bei einer weiteren, besonders vorteilhaften Ausgestaltung weist der Grundkörper an seiner Boden- und Deckenfläche eine Schutzlage und/oder an seinen Seitenflächen eine weitere Schutzlage auf, die so weit über den Grundkörper im Bereich der Eintrittsseite der verunreinigten Luft hinausragen, daß sie ohne Beschädigung um einen Winkel von 180° durch Umklappen am Grundkörper lösbar zu fixieren sind. Durch diese Fixierung läßt sich einerseits der entsprechende äußere Bereich des Grundkörpers zu einem Gehäuse durch Einklemmung des umgeklappten Abschnittes abdichten, so daß dementsprechend hierüber keine unfiltrierte Luft abgezogen werden kann, und andererseits erleichtert dieser umgeklappte Bereich die Entnahme des mit abfiltrierten Schmutz beladenen Taschenfilter bzw. bzw. der entsprechend beladenen Taschenfilter aus dem Grundkörper.

Um die zuvor beschriebene Schutzlage bzw. die weitere Schutzlage nach Umklappen um einen Winkel von etwa 180° am Grundkörper zu fixieren, bietet es sich an, diese Fixierung insbesondere durch ein entsprechendes schnurartiges Bindematerial oder durch Klettelemente nach dem Umklappen der Schutzlagen vorzunehmen.

Werden bei dieser Ausführungsform die Fixierelemente derart ausgestaltet, daß sie nach Lösen noch dazu verwendet werden können, nach Herausnahme des beladenen Taschenfilters dieses mit der wieder zurückgeklappten Schutzlage und/oder der weiteren Schutzlage zu verschließen, so erlaubt diese Weiterbildung des erfindungsgemäßen Filtermoduls eine besonders verunreinigungsfreie Entnahme, Transport und Entsorgung des beladenen Filtermediums.

Eine andere Ausgestaltung der erfindungsgemäßen Vorrichtung sieht zur Erleichterung des Entnehmen des Grundkörpers des Filtermoduls vor, daß der Boden- und/oder Deckenfläche mindestens ein Griffelement zugeordnet ist bzw. sind. Insbesondere ist dieses Griffelement als Rohr, vorzugsweise als hohles Metallrohr, ausgebildet, das die Bodenfläche mit der Deckenfläche im Bereich der zur Eintrittsseite weisenden beidseitigen Kanten des Grundkörpers verbindet. Durch ein derartig ausgestaltetes Griffelement läßt sich das erfindungsgemäße Filtermodul, selbst wenn dieses eine relativ große Bauweise aufweist, besonders einfach und schnell austauschen, transportieren und entsorgen, ohne daß hierbei eine unzumutbare körperliche Belastung des Mitarbeiters gefordert wird. Ebenso erleichtert das beidseitig am Grundkörper angeordnete Griffelement die Anordnung und Positionierung eines frischen, unbeladenen Filtermoduls.

Eine weitere, besonders vorteilhafte Ausgestaltung der erfindungsgemäßen Vorrichtung, die insbesondere dann zur Anwendung gelangt, wenn besonders hohe Ansprüche bezüglich der Konzentration der Restverunreinigungen in der gereinigten Luft gestellt werden, sieht vor, daß das Filter in Strömungsrichtung der zu reinigenden Luft gesehen einen ersten, vorzugsweise als Filtermodul ausgebildetes Teil und hieran anschließend ein zweites, als Feinfilter ausgebildetes Teil aufweist. Insbesondere ist das zweite Teil ebenfalls als Taschenfilter ausgebildet und weist zwei Wandflächen sowie eine Bodenfläche und eine Deckenfläche auf, die miteinander verbunden und vorzugsweise miteinander vernäht und/oder verklebt sind. Die Wandflächen sowie die Boden- und Deckenfläche sind aus einem wasserfesten Material und insbesondere aus einem textilen Material und vorzugsweise aus einem Vlies ausgebildet, wobei die Luftdurchlässigkeit und damit der Abscheidungsgrad für Verunreinigungen durch die Porosität und Dichte des wasserfesten Materials oder des textilen Materials oder des Vlieses bestimmt wird.

Vorzugsweise weist jedes im Filtermodul vorgesehenes Taschenfilter mindestens eine äußere, zur verunreinigten Luft weisenden Papiergelegeschicht und mindestens eine damit zusammenwirkende Vliesschicht auf. Abhängig von der ausgewählten Vliesschicht, die vorzugsweise aus Polypropylenfasern oder aus Polyethylenfasern besteht, der Dicke der Vliesschicht und der Dicke der Papiergelegeschicht, die insbesondere aus mehreren Lagen aufgebaut ist, kann dieses Filtermedium eine so große Aussteifung haben, daß das zuvor beschriebene Stützelement oder der Grundkörper entfallen kann. Dies trifft insbesondere auf solche Ausführungsformen zu, die ein Filtermedium aufweisen, bei dem die Papiergelegeschicht mit der Vliesschicht, so insbesondere durch Vernähen oder Verkleben, verbunden ist.

Ist bei der zuvor beschriebenen Ausführungsform die mindestens eine Vliesschicht mit dem mindestens einen Papiergelege nicht beispielsweise durch Vernähen oder Verkleben dauerhaft verbunden, so konnte überraschend festgestellt werden, daß sich bei einem Filterwechsel das mit Verunreinigungen beladene Papiergelege von der Vliesschicht problemlos entfernen läßt, so daß die Vliesschicht wiederverwendbar ist und nur das Papiergelege ausgetauscht und verworfen werden muß.

Um eine Verschmutzung des zuvor beschriebenen Grundkörpers während der Benutzung des Taschenfiltermoduls zu verhindern, sieht eine Weiterbildung vor, daß alle mit verunreinigter Luft in Kontakt kommenden Teile des Grundkörpers und des Stützelementes mit mindestens einer austauschbaren Vliesschicht versehen sind, wobei die Vliesschicht zusätzlich noch mit dem zuvor beschriebenen Papiergelege versehen sein kann.

Bei einer weiteren Ausführungsform der erfindungsgemäßen Vorrichtung ist der zuvor beschriebene Grundkörper des Filtermoduls als gerades Prisma mit einer viereckigen oder quadratischen Grundfläche ausgebildet. An der Eintrittsseite für die verunreinigte Luft ist ein Adapter zugeordnet, der beidseitig der Eintrittsseite angeordnete Abdeckelemente aufweist, die die zwischen benachbarten Filtern befindlichen Flächen abdecken. Die Krümmung der Abdeckelemente ist an die Krümmung des Mantels des äußeren Hohlzylinders der zylindrischen Halterungseinrichtung angepaßt, wobei vorzugsweise die Bereiche der Abdeckelemente, die mit verunreinigter Luft in Kontakt treten, zusätzlich noch durch eine leicht austauschbare Vliesschicht und/oder ein Papiergelege vor Verschmutzungen geschützt sind.

Um das Strömungsverhalten und insbesondere die pro Zeiteinheit strömende Menge der gereinigten Luft und somit auch der verunreinigten Luft einzustellen oder zu variieren, sieht eine weitere vorteilhafte Ausführungsform der erfindungsgemäßen Vorrichtung vor, daß dem inneren Hohlzylinder der zylindrischen Halterungseinrichtung ein die Austrittsöffnung für gereinigte Luft vollständig oder teilweise verschließendes Absperrelement zugeordnet ist. Dieses Absperrelement ist vorzugsweise mit in der Fläche veränderbaren Öffnungen versehen, so daß hierdurch sehr individuell das Strömungsverhalten oder die pro Zeiteinheit strömende Menge Luft besonders einfach einstellbar ist. Vorzugsweise ist dieses Absperrelement derart ausgebildet, daß es gleichzeitig mehrere Filteraustrittsöffnungen, insbesondere von in einer Reihe übereinander angeordneten Filtern, teilweise oder vollständig verschließt. Das Absperrelement ist wahlweise so ausgebildet, daß es entweder fest oder drehbar einer Reihe von übereinander angeordneten Filtern zugeordnet ist.

Wie bereits vorstehend mehrfach dargelegt, wird die erfindungsgemäße Vorrichtung insbesondere zum Filtrieren der verunreinigten Luft in oder aus Lackieranlagen verwendet. Dementsprechend wird bei einer besonders geeigneten und vorteilhaften Ausgestaltung der erfindungsgemäßen Vorrichtung, die insbesondere im Bereich der Automobilherstellung und dort gezielt dem Lackierbereich für Kraftfahrzeugkarossen und Kraftfahrzeugbestandteile zuzuordnen ist, der Zuführbereich für verunreinigte Luft durch eine Lackieranlage gebildet, die dem Gehäuse der erfindungsgemäßen Vorrichtung zugeordnet ist. Entweder ist die Lackieranlage als solche direkt mit dem Gehäuse über entsprechende Kanalsysteme verbunden oder vorzugsweise wird die Lackieranlage oberhalb des Gehäuses angeordnet, so daß der Bodenbereich der Lackieranlage in Verbindung mit einem Deckenbereich des Gehäuses den Zuführbereich für verunreinigte Luft ausbilden. Hierbei bietet es sich beispielsweise an, den Bodenbereich der Lackieranlage und/oder den Deckenbereich des Gehäuses als durchlässigen Rost auszugestalten, so daß die verunreinigte Luft in das Gehäuse strömt und mittels eines dem Abführbereich für gereinigte Luft zugeordneten Sauggebläses aus dem Gehäuse durch die von der Halterungseinrichtung der erfindungsgemäßen Vorrichtung vorgesehenen Filter gesaugt und über den Abführbereich für gereinigte Luft, der als entsprechendes Kanalsystem ausgebildet ist, insbesondere der Lackieranlage als gereinigte Luft wieder zugeführt wird. Desweiteren ist in Strömungsrichtung der gereinigten Luft gesehen vor dem Sauggebläse mindestens ein zusätzliches Filter angeordnet, wobei dieses mindestens eine zusätzliche Filter als Sicherheitsfilter dient und in seiner Ausgestaltung an die jeweiligen Anforderungen angepaßt ist.

Um bei den zuvor beschriebenen Ausführungsformen der erfindungsgemäßen Vorrichtung den Zeitpunkt eines Austausches eines mit Verunreinigungen beladenen Filters meßtechnisch zu erfassen, sieht eine besonders vorteilhafte Ausgestaltung der zuvor beschriebenen erfindungsgemäßen Vorrichtung vor, daß hierbei dem Filter, der Filteranordnung, dem Filtermodul und/oder dem Abführbereich für gereinigte Luft mindestens ein Sensor zur Erfassung der Strömungsgeschwindigkeit, der Feuchtigkeit der gereinigten Luft ein optischer Sensor oder eine Kamera zugeordnet sind bzw. ist. Sobald dieser Sensor eine Verringerung der Strömungsgeschwindigkeit und/oder eine Erhöhung der Feuchtigkeit der gereinigten Luft feststellt, ist das entsprechende Filter, die entsprechende Filteranordnung oder das entsprechende Filtermodul auszutauschen durch ein entsprechend nicht mit Verunreinigungen beladenes Filter oder Filtermodul zu ersetzen. Gleiches gilt, wenn die Kamera oder der optische Sensor, beispielsweise über ein geändertes Reflexionsverhalten oder über eine Farbänderung der Filteroberfläche erkennen läßt, daß ein Austausch der Filter, der Filteranordnung oder des entsprechenden Filtermoduls notwendig wird.

Vorstehend sind Ausführungsformen der erfindungsgemäßen Vorrichtung beschrieben, bei denen in einem Gehäuse nur eine einzige Halterungseinrichtung für die mindestens zwei Filteranordnungen vorhanden ist. Selbstverständlich ist es möglich, mehr als eine Halterungseinrichtung, so beispielsweise zwei bis acht Halterungseinrichtungen, in einem Gehäuse anzuordnen. Bei dieser Ausführungsform der erfindungsgemäßen Vorrichtung bietet es sich an, pro Halterungseinrichtung jeweils eine von außen zugängliche Öffnung im Gehäuse vorzusehen, die wahlweise jeweils mit einem Türelement verschließbar ist.

Eine Abwandlung zu der zuvor beschriebenen Anordnung von mehr als einer Halterungseinrichtung in einem Gehäuse mit einer der Anzahl der Halterungseinrichtungen entsprechenden Anzahl von Türelementen sieht vor, daß hierbei ein Türelement vorgesehen ist und die Halterungseinrichtungen bewegbar gelagert sind, so daß sie bei einem Filterwechsel vor das wenigstens eine Türelement positioniert werden.

Im Folgenden wird ein nicht zur Erfindung gehörendes Filtermodul zur Verwendung in einer Vorrichtung nach einem der Ansprüche 1 bis 25 diskutiert.
Insbesondere weist das nicht zur Erfindung gehörende Filtermodul einen Grundkörper, wie dieser vorstehend beschreiben ist, auf, dessen Boden- und Deckenfläche an der zur verunreinigten Luft weisenden Eintrittsseite bogenförmig gekrümmt ausgebildet ist. Wird diese Ausführungsform des Filtermoduls von der zuvor beschriebenen zylindrischen Halterungseinrichtung gehaltert, so richtet sich der Krümmungsradius der zur verunreinigten Luft weisenden Eintrittsseite der Boden- und Deckenfläche nach dem Außenkrümmungsradius der zylindrischen Halterungseinrichtung und variiert insbesondere zwischen 92° und 125°, vorzugsweise zwischen 92° und 105° und insbesondere zwischen 94° und 98°. Diese Krümmung weist den besonderen Vorteil auf, daß das so gestaltete Filtermodul ohne Verklemmung besonders einfach und schnell einem Halterungselement mit einem rechteckigen Querschnitt entnommen und auch in dieses wieder eingesetzt werden kann.

Vorzugsweise werden von einem derartigen Filtermodul zwei bis sechs Taschenfilter gehaltert.

Eine weitere, geeignete Ausführungsform des Filtermoduls, das in einer der zuvor beschriebenen Ausführungsformen der erfindungsgemäßen Vorrichtung insbesondere als Filter verwendet wird, sieht vor, daß hierbei die Bodenfläche und die Deckenfläche des Grundkörpers im Bereich der Eintrittsseite der verunreinigten Luft mit der Schutzlage und die beiden nach außen weisenden Seitenflächen der jeweiligen äußeren Taschenfilter mit der weiteren Schutzlage versehen und insbesondere vernäht, sind, wobei sowohl die Schutzlage als auch die weitere Schutzlage so ausgestaltet sind, wie dies vorstehend beschrieben ist. Ferner ist bei dieser Ausgestaltung des Filtermoduls dessen Grundkörper derart elastisch ausgebildet ist, daß die Deckenfläche in Richtung auf die Bodenfläche und/oder die eine Seitenfläche in Richtung auf die andere Seitenfläche verformbar ist. Durch eine derartige elastische Verformung des Grundkörpers wird erreicht, daß sich die Schutzlage und die vorzugsweise damit verbundene weitere Schutzlage um 180° umklappen läßt, was einerseits eine zusätzliche Fixierung der Taschenfilter am Grundkörper und andererseits eine äußerst wirksame Abdichtung des äußeren Bereiches des Grundkörpers zu einem entsprechenden Gehäuse durch Einklemmung des umgeklappten Abschnittes bewirkt, wie dies bereits vorstehend beschrieben ist. Durch eine derartige elastische Ausgestaltung des Grundkörpers im Bereich der Eintrittsseite für verunreinigte Luft läßt sich dieser besonders einfach, schnell und unter Anwendung von einer geringen Kraft gasdicht in einem entsprechenden Gehäuse anordnen und auch ebenso aus diesem Gehäuse wieder entnehmen, sobald die Filtermedien mit abfiltrierter Verunreinigung beladen sind, ohne daß dabei die Nachteile auftreten, wie sie eingangs beim Stand der Technik im Zusammenhang mit den Pappkartons herausgestellt worden sind.

Um die zuvor angesprochene elastische Verformbarkeit des Grundkörpers zu bewirken, besteht die Möglichkeit, daß hierbei der Grundkörper aus einem dauerelastischen Material, insbesondere einem dauerelastischen Stegmaterial aus Kunststoff, ausgebildet ist, wobei dieser Kunststoff selbstverständlich lösungsmittel- und/oder wasserfest ist.

Eine weitere Ausführungsform eines nicht zur Erfindung gehörenden Filtermoduls sieht einen Grundkörper vor, bei dem jeweils mindestens ein der Eintrittsseite für verunreinigte Luft zugeordneter Steg der Bodenfläche und der Deckenfläche und/oder der beiden Seitenflächen als Federelement ausgebildet ist. Weisen die Bodenfläche und die Deckenfläche oder nur die beiden Seitenflächen diesen Steg auf, so läßt sich ein derartiger Grundkörper im Bereich der Eintrittsseite für verunreinigte Luft entweder über seine Höhe oder über seine Breite elastisch verformen und entsprechend einfach in einem dem Grundkörper zugeordneten Gehäuse anordnen und entnehmen. Diese Anordnung und Entnahme des Filtermoduls wird dann noch weiter verbessert, wenn die Bodenfläche, die Deckenfläche und die beiden Seitenfläche entsprechend elastisch verformbare Stege aufweisen.

Im einfachsten Fall wird diese elastische Verformung der Stege dadurch sichergestellt, daß sie aus einem relativ dünnen Material, insbesondere aus einem Metalldraht und vorzugsweise mit einem Durchmesser zwischen 1 mm und 4 mm, ausgebildet werden, wobei insbesondere der Metalldraht ein Edelstahldraht ist, wobei durch Variation seiner Dicke die Federkraft des so gestalteten Federelementes veränderbar ist.

Eine andere Ausgestaltung der zuvor beschriebenen Ausführungsform sieht vor, daß hierbei das Federelement als Biegefeder ausgestaltet ist und sich vorzugsweise nur über einen Abschnitt des mindestens einen verformbaren Steges erstreckt.

Vorzugsweise ist die zuvor beschriebene Biegefeder als kreissegmentartige, als U-förmige, als Ω-förmige oder als V-förmige Biegefeder ausgebildet, wobei insbesondere in der Bodenfläche und der Deckenfläche kreissegmentartige und/oder U-förmige Biegefedern vorgesehen sind, die sich über einen Abschnitt des entsprechenden Steges im Bereich der Eintrittsseite für verunreinigte Luft erstrecken. Der Vorteil der so geformten Biegefedern ist darin zu sehen, daß sie einerseits die erforderliche dauerhafte Elastizität sicherstellen und andererseits nur einen geringen Platzbedarf erfordern.

Eine weitere Abwandlung der zuvor beschriebenen Ausführungsform des nicht zur Erfindung gehörenden Filtermoduls sieht vor, daß der Grundkörper des Filtermoduls im Bereich der Eintrittsseite für verunreinigte Luft jeweils nur einen einzigen, ersten Steg aufweist, der mit den zuvor beschriebenen zwei kreissegmentartigen oder zwei U-förmigen Biegefedern versehen ist, und daß desweiteren jeweils ein zweiter, geradlinig verlaufender waagerechter Steg die Bodenfläche und die Deckenfläche des Grundkörpers ausbildet, wobei dieser zweite, waagerechter Steg etwa in der Mitte des Grundkörpers positioniert ist. Durch diesen jeweils zweiten, geradlinig verlaufenden waagerechten Steg wird der Grundkörper stabilisiert, ohne daß die Elastizität und damit auch die Verformbarkeit des Grundkörpers im Bereich der Eintrittsseite für verunreinigte Luft negativ beeinflußt wird. Ein weiterer Vorteil dieser zweiten Stege ist darin zu sehen, daß abhängig von ihrer Position relativ zur Position des jeweils ersten Steges, die Breitenelastizität und die Breitenverformbarkeit des Grundkörpers einstellbar ist.

Soll das Filtermodul auch über eine Höhenelastizität und Höhenverformbarkeit des Grundkörpers verfügen, so sieht eine besonders geeignete Ausgestaltung vor, daß hierbei die Bodenfläche mit der Deckenfläche im Bereich der Eintrittsseite für verunreinigte Luft über mindestens zwei senkrecht verlaufende Stege verbunden ist, wobei die Stege jeweils einen Abschnitt aufweisen, der insbesondere als V-förmige oder Ω-förmige Biegefeder ausgebildet ist. Hierbei erstreckt sich diese Biegefeder in Strömungsrichtung der zu filtrierenden Luft von der Eintrittsseite für verunreinigte Luft in Richtung auf die Austrittsseite der gereinigten Luft, wobei vorzugsweise zwei derartiger Stege jeweils ein Taschenfilter von seiner äußeren, nicht mit der verunreinigten Luft in Kontakt tretenden Seiten lösbar haltert, wie dies nachfolgend noch anhand von zwei Ausführungsformen mit einer V-förmigen und einer Ω-förmigen Biegefeder in Verbindung mit der Zeichnung näher erläutert ist.

Insbesondere weist das Filtermodul pro Taschenfilter zwei im Wesentlichen senkrecht verlaufende, mit einem Ω-förmigen oder V-förmigen Abschnitt versehene Stege auf, wobei jedes Taschenfilter von seinen äußeren, nicht mit der verunreinigten Luft in Kontakt tretenden Seiten von den Stegen lösbar gehaltert ist.

Vorteilhafte Weiterbildungen der erfindungsgemäßen Vorrichtung sind in den Unteransprüchen angegeben.

Die erfindungsgemäße Vorrichtung wird nachfolgend anhand von Ausführungsbeispielen in Verbindung mit der Zeichnung erläutert. Es zeigen:
- Figur 1: eine perspektivische schematische Ansicht einer ersten Ausführungsform der Vorrichtung zum Filtrieren;
- Figur 2: eine vertikale schematische Schnittansicht längs der Linie A-B in Figur 1;
- Figur 3: eine horizontale schematische Schnittansicht längs der Linie C-D in Figur 1;
- Figur 4: eine schematische horizontale Schnittansicht einer ersten Ausführungsform eines nicht zur Erfindung gehörenden Filtermoduls, längs der Bodenfläche 23 gemäß Figur 5;
- Figur 5: eine schematische perspektivische Ansicht des im Schnitt abgebildeten Filtermoduls aus Figur 4, jedoch ohne Filtermedien;
- Figur 6: eine schematische perspektivische Ansicht einer Weiterbildung der in den Figuren 1 bis 3 sowie 8 und 9 abgebildeten Halterungseinrichtung;
- Figur 7: ein horizontaler Schnitt durch die Halterungseinrichtung gemäß Figur 6;
- Figur 8: eine schematische perspektivische Ansicht der ersten Ausführungsform der Halterungseinrichtung mit einem im Detail abgebildeten, nach vorne herausgezogenen kastenförmigen Halterungselement;
- Figur 9: eine horizontale Schnittansicht der Vorrichtung mit zwei Halterungseinrichtungen;
- Figur 10: eine schematische, perspektivische Darstellung einer zweiten Ausführungsform des nicht zur Erfindung gehörenden Filtermoduls, mit einem Grundkörper, jedoch ohne Filtermedium;
- Figur 11: wie Figur 10, jedoch mit Filtermedium, das aus drei Taschenfiltern ausgebildet ist;
- Figur 12: ein Horizontalschnitt der Figur 11, etwa 5 cm oberhalb der Bodenfläche;
- Figur 13: eine schematische, perspektivische Darstellung einer dritten Ausführungsform des nicht zur Erfindung gehörenden Filtermoduls, mit einem Grundkörper, jedoch ohne Filtermedium;
- Figur 14: wie Figur 13, jedoch mit Filtermedium, das aus drei Taschenfiltern ausgebildet ist;
- Figur 15: ein Horizontalschnitt der Figur 14, etwa 5 cm oberhalb der Bodenfläche;
- Figur 16: eine schematische perspektivische Ansicht einer vierten Ausführungsform eines nicht zur Erfindung gehörenden Filtermoduls;
- Figur 17: ein horizontaler Schnitt durch das Filtermodul gemäß Figur 16;
- Figur 18: eine perspektivische Abbildung eines Adapters;
- Figur 19: eine horizontale Schnittansicht eines Omega-förmigen Taschenfiltermoduls;
- Figur 20: eine horizontale Schnittansicht eines anders geformten Omegaförmigen Taschenfiltermoduls;
- Figur 21: eine horizontale Schnittansicht eines aus zwei Omega-förmigen Taschenfiltern bestehenden Filtermoduls;
- Figur 22: eine weitere, schematisch und perspektivisch abgebildete Ausführungsform eines nicht zur Erfindung gehörenden Filtermoduls mit einem hiermit lösbar verbundenen Nachfilter;
- Figur 23: das in Figur 22 abgebildete Filtermodul im eingebauten Zustand;
- Figur 24: eine horizontale Schnittansicht der Figur 23, etwa 5 cm oberhalb der Bodenfläche;
- Figur 25: eine schematische, perspektivische Darstellung einer anderen Ausführungsform des nicht zur Erfindung gehörenden Filtermoduls, mit einem Grundkörper, jedoch ohne Filtermedium;
- Figur 26: wie Figur 25, jedoch mit Filtermedium, das aus drei Taschenfiltern ausgebildet ist;
- Figur 27: ein Horizontalschnitt der Figur 26, etwa 15 cm unterhalb der Deckenfläche;
- Figur 28: eine schematische, perspektivische Darstellung einer weiteren Ausführungsform des nicht zur Erfindung gehörenden Filtermoduls, mit einem Grundkörper, jedoch ohne Filtermedium;
- Figur 29: wie Figur 28, jedoch mit Filtermedium, das aus drei Taschenfiltern ausgebildet ist; und
- Figur 30: ein Horizontalschnitt der Figur 29, etwa 15 cm unterhalb der Deckenfläche.

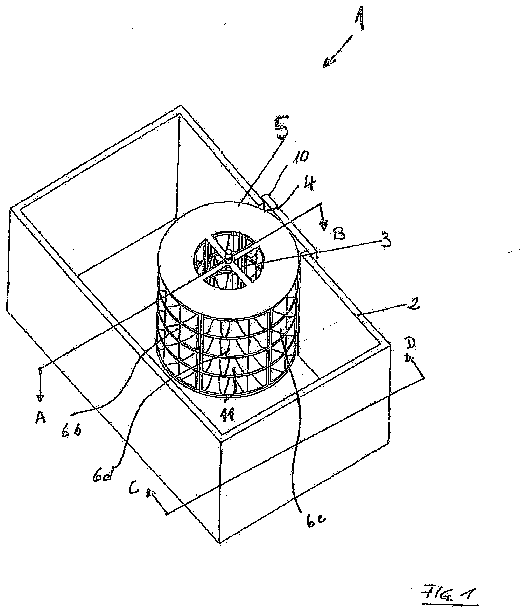

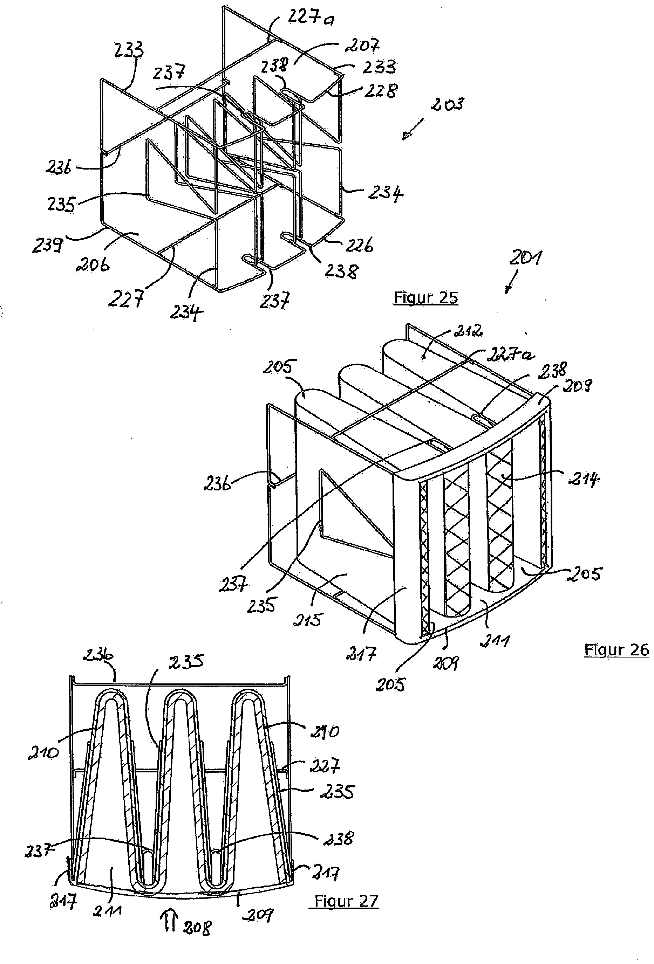

In den Figuren 1 bis 24 einerseits und in den Figuren 25 bis 30 andererseits sind die selben Gegenstände mit den selben Bezugszeichen versehen.

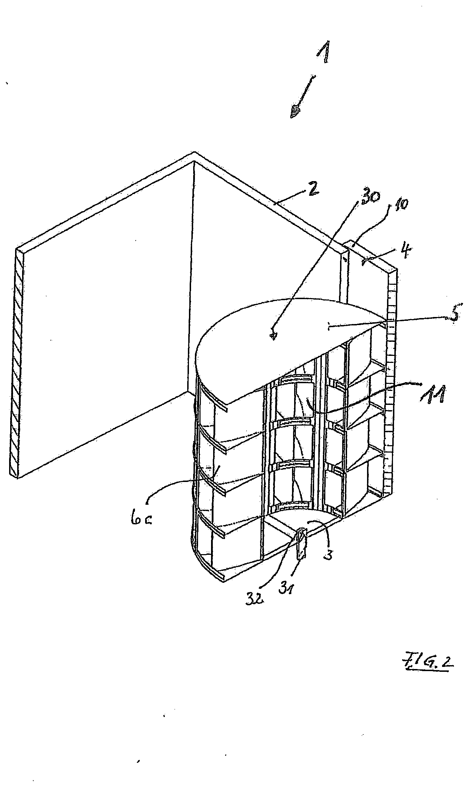

Die in den Figuren 1 bis 3 sowie 8 und 9 gezeigte und insgesamt mit 1 bezeichnete Vorrichtung zum Filtrieren von verunreinigter Luft ist in einem Gehäuse 2 angeordnet, wobei zur besseren Darstellung die Deckenfläche des Gehäuses 2 in den Figuren 1 bis 3 sowie 8 und 9 nicht abgebildet wurde. Ebensowenig bilden die Figuren 1, 3 und 8 den Deckenabschluß 30 der zylindrischen Halterungseinrichtung 5 ab, wie dieser in Figur 2 dargestellt ist.

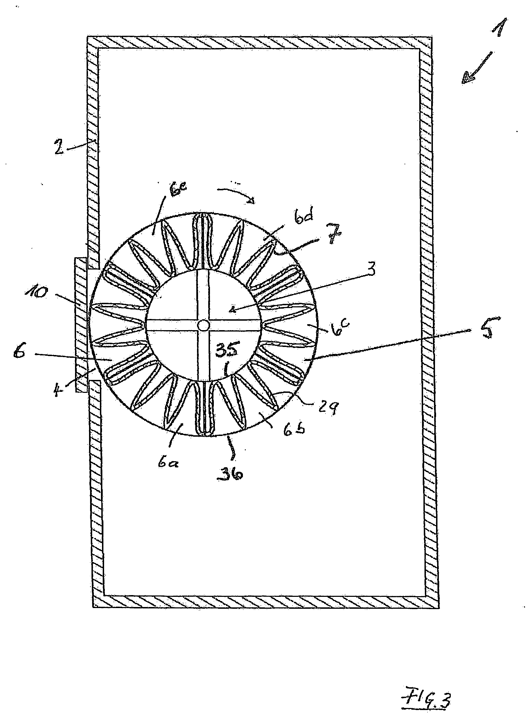

Die in den Figuren 1 bis 3 und 6 bis 9 abgebildete zylindrische Halterungseinrichtung 5 besteht aus einem inneren Hohlzylinder 35 und einem äußeren Hohlzylinder 36, wie dies beispielsweise in Figur 3, 7 und 9 dargestellt ist.

Der Zuführbereich für verunreinigte Luft erfolgt bei der in den Figuren 1 bis 3 und 6 bis 9 dargestellten Ausführungsform über den nicht gezeigten Deckenbereich des Gehäuses 2. Über dem Gehäuse 2 ist beispielsweise eine Spritzkabine oder eine Lackieranlage (nicht abgebildet) angeordnet, deren Boden mit Öffnungen versehen ist, die mit entsprechenden Öffnungen in der Decke des Gehäuses 2 fluchten oder der Boden selbst wird durch die Decke des Gehäuses 2 ausbildet, so daß die verunreinigte Luft hierüber in das Gehäuse 2 gelangt.

Das Gehäuse 2 ist mit einer von außen zugänglichen Öffnung 4 versehen, die mittels eines Türelementes 10 verschließbar ist. Der Abführbereich für gereinigte Luft 3 (Figur 3) erfolgt aus der Vorrichtung zum Filtrieren von verunreinigter Luft 1 über einen zentralen in der Mitte angeordneten, als innerer Hohlzylinder 35 ausgebildeten Abführbereich 3, der sich über die gesamte Höhe der zylindrischen Halterungseinrichtung 5 erstreckt und in einen Kanal mündet, dem ein Sauggebläse (nicht gezeigt) zugeordnet ist.

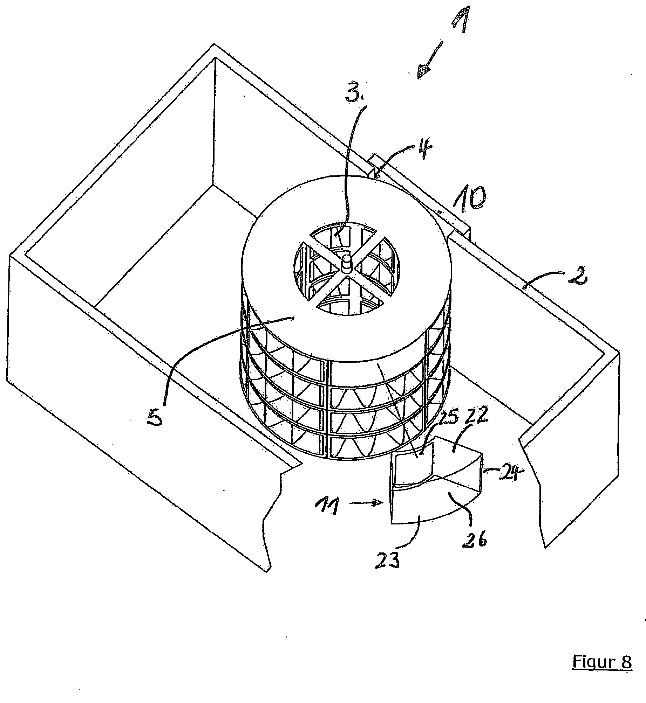

Die zylindrisch ausgebildete Halterungseinrichtung 5 weist über ihren Umfang gesehen sechs identisch ausgestaltete Filteranordnungen 6, 6a bis 6e mit jeweils einem Filter 7 auf, wobei über die Höhe der zylindrischen Halterungseinrichtung gesehen insgesamt vier dieser Filteranordnungen 6, 6a bis 6e scheibenförmig übereinander angeordnet sind. Somit vermag die zylindrische Halterungseinrichtung 5 insgesamt 24 Filter 7 zu haltern, die die Verunreinigungen aus der über den Zuführbereich für verunreinigte Luft zugeführten Luft abfiltrieren. Figur 8 bildet zusätzlich ein, beispielhaft nach vorne aus der Halterungseinrichtung 5 herausgezogene Filteranordnung 6 ab, die als kastenförmiges Halterungselement 11 ausgebildet ist.

Fußseitig ist die zylindrische Halterungseinrichtung 5 über einen zentralen Dorn 31 und einer hiermit zusammenwirkenden Hülse 32 drehbar gelagert, wie dies in Figur 2 dargestellt ist.

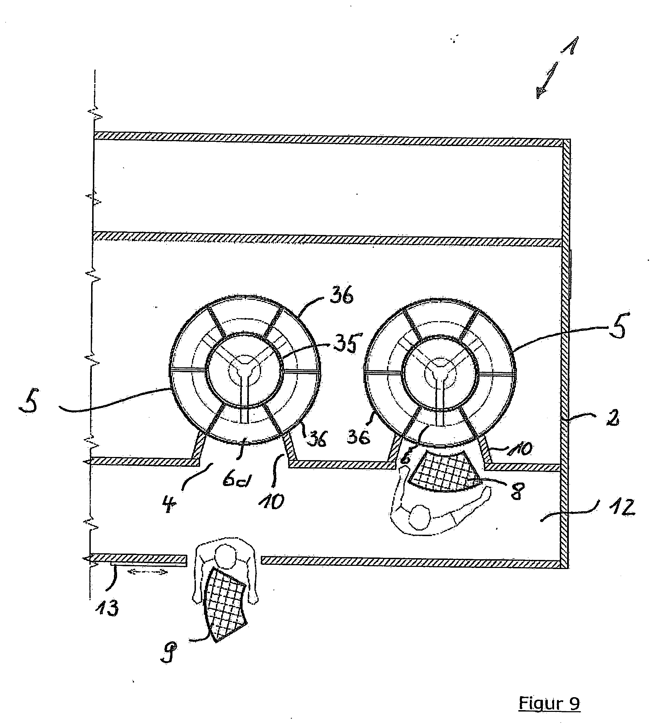

Sollte es aufgrund der Zusammensetzung der abfiltrierten Verunreinigung und insbesondere bei einer hohen Konzentration der Verunreinigung an Flüssigkeiten und vorzugsweise an Wasser erforderlich sein, die auf dem Filtermedium abgeschiedene Flüssigkeit bzw. das Wasser zu entfernen, können die Filter 7 in eine Position durch Drehung der Halterungseinrichtung 5 gebracht werden, wie diese in Figur 3 für die Filteranordnung 6 abgebildet ist. Durch teilweises oder vollständiges Öffnen des Türelementes 10 werden vier übereinander angeordnete Filter in dieser zweiten Betriebsstellung ausschließlich mit Frischluft, beispielsweise aus der angrenzenden Halle oder Atmosphäre, durchströmt, so daß hiernach die mit getrockneten Verunreinigungen beladenen vier Filter unproblematisch ausgetauscht werden können, wie dies nachfolgend noch bei der Figur 9 beschrieben ist.

Durch eine Drehung der zylindrischen Halterungseinrichtung 5 in Pfeilrichtung (Figur 3) oder umgekehrt hierzu läßt sich die zylindrische Halterungseinrichtung 5 zwischen einer ersten Betriebsstellung, in der die verunreinigte Luft alle 24 Filter 7 der vierfach scheibenförmig übereinander angeordneten sechs Filteranordnungen 6, 6a bis 6e durchströmt und einer zweiten Betriebsstellung, in der die verunreinigte Luft fünf der Filteranordnungen, beispielsweise 6a bis 6e, mit den darin positionierten Filtern 7 und somit bei der gezeigten Ausführungsform insgesamt 20 Filter 7 durchströmt, während gleichzeitig die vier übereinander angeordneten Filter 7 der verbliebenen einen Filteranordnung 6 über die von außen zugängliche Öffnung 4 im Gehäuse 2 und das geöffnete Türelement 10 ausgetauscht werden, sobald diese vier Filter 7 mit abfiltrierten Verunreinigungen beladen sind. Dieser Filteraustausch der mit Verunreinigungen beladenen Filter erfordert keine Unterbrechung des Filtrierens von verunreinigter Luft. Da mindestens 20 Filter nach wie vor die verunreinigte Luft filtrieren, entsteht im Bereich der von außen zugänglichen Öffnung 4 ein gewisser Sog, der verhindert, daß durch das geöffnete Türelement 10 verunreinigte Luft unerwünscht nach außen dringt. Sobald der Austausch der beladenen Filter erfolgt ist, wird das Türelement 10 wieder verschlossen, so daß 24 Filter wieder betriebsbereit sind und die verunreinigte Luft filtrieren.

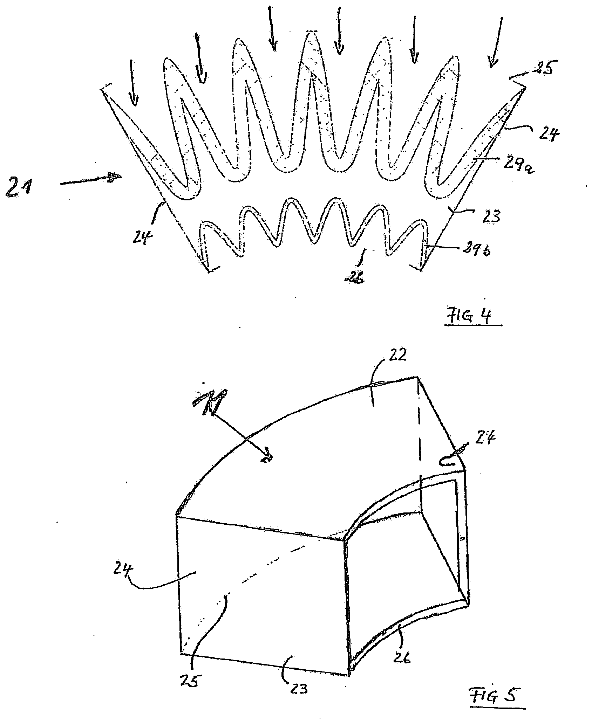

Bedingt durch die Ausbildung der zylindrischen Halterungseinrichtung 5 mit einem inneren und einem äußeren Zylinder hat jedes Filter 7 anströmseitig eine sehr große Fläche, die sich abströmseitig entsprechend verkleinert, wie dies nachfolgend noch bei der Beschreibung der Figuren 4 und 5 erläutert wird.

Um die Filter 7, die vorzugsweise als leicht auszutauschende Filtermodule ausgebildet sind, wie sie nachstehend noch in Verbindung mit den Figuren 4 und 5 sowie 10 bis 22 beschrieben werden, sicher zu haltern, bestehen zwei bevorzugte Möglichkeiten. Entweder weist die zylindrische Halterungseinrichtung 5 kastenförmige, fest in der Halterungseinrichtung 5 angeordnete Halterungselemente 11 auf oder die kastenförmigen Halterungselemente 11 werden lösbar von der Halterungsrichtung 5 gehaltert, so daß bei einem Filteraustausch das kastenförmige Halterungselement zusammen mit den darin angeordneten Filtermedien entnommen und ggf. nach Reinigung mit frischen Filtermedien versehen wieder in der Halterungseinrichtung 5 angeordnet wird. Fest mit der Halterungseinrichtung 5 verbundene oder einstückig mit dieser ausgebildete Halterungselemente 11 werden bevorzugt mit Filtermodulen bestückt.

Jedes kastenförmige Halterungselement 11 weist eine geschlossene Decken- 22 und Bodenfläche 23, zwei gegenüberliegende geschlossene Seitenflächen 24 und zwei mit den Luftdurchtrittsöffnungen versehene gegenüberliegende Stirnflächen 25 und 26 (Figur 4, 5 und 8) auf.

Während die Figuren 1 und 2 keine Filter sondern lediglich kastenförmige Halterungselemente 11 für Filter abbilden, zeigt die Figur 3 schematisch zusätzlich in jeder Filteranordnung 6, 6a bis 6e ein Filtermedium 29, die das Filter bildet oder Bestandteil des Filters oder des Filtermoduls ist.

Die zuvor beschriebene Ausführungsform der Vorrichtung 1 zum Filtrieren von verunreinigter Luft arbeitet wie folgt: Durch den deckenseitigen Zuführbereich wird die verunreinigte Luft in das Gehäuse 2 geführt. Bedingt durch ein Sauggebläse, das dem Abführbereich 3 für gereinigte Luft zugeordnet ist, wird in der ersten Betriebsstellung der zylindrischen Halterungseinrichtung 5 die verunreinigte Luft durch alle 24 Filter der Filteranordnungen 6, 6a bis 6e gesogen. Die so gereinigte Luft kann beispielsweise als Zuluft zur Spritzkabine oder Lackieranlage wieder zugeführt oder als unverschmutzte Luft in die Atmosphäre abgelassen werden.

Das in den Figuren 4 und 5 insgesamt mit 21 bezeichnete und nicht zur Erfindung gehörenden Filtermodul, das beispielsweise als Filter 7 in der zuvor beschriebenen und in den Figuren 1 bis 3 abgebildeten Ausführungsform eingesetzt wird, weist ein Gehäuse auf, das vorstehend auch als kastenförmiges Halterungselement bezeichnet ist und das eine Deckenfläche 22, eine Bodenfläche 23 und zwei Seitenflächen 24 umfaßt. Die äußeren bogenförmige Stirnfläche 25 und die innere bogenförmige Stirnfläche 26 sind jeweils mit Luftdurchtrittsöffnungen versehen, die sich vorzugsweise über die gesamte Fläche der Stirnflächen 25 und 26 erstrecken. Bedingt durch die bogenförmige Ausgestaltung der Stirnflächen mit unterschiedlichen Krümmungsradien hat jedes Filtermodul 21 eine sehr große, äußere Luftdurchtrittsöffnung und eine hiermit verglichene kleinere innere Luftdurchtrittsöffnung, was sehr positiv den Filterwirkungsgrad beeinflußt. Das Gehäuse des Filtermoduls 21 ist vollständig aus einem wiederverwendbaren Kunststoffmaterial oder aus einem Blech, vorzugsweise einem 1 mm bis 4 mm starken Edelstahlblech, angefertigt.

Innerhalb des Gehäuses des Filtermoduls 21 sind individuell gestaltbare Filtermedien 29 a und 29 b angeordnet, wobei die Figur 4 beispielhaft eine diesbezügliche Anordnung der Filtermedien im Schnitt abbildet. In Strömungsrichtung der zu filtrierenden verunreinigten Luft gesehen, die in Figur 4 durch die sechs Pfeile an der äußeren bogenförmigen Stirnfläche 25 eingezeichnet sind, befindet sich ein erstes Filtermedium 29 a und hierauf folgend ein zweites Filtermedium 29 b, wobei sowohl die Dicke der Filtermedien 29 a und 29 b als auch die Dichten dieser Filtermedien unterschiedlich sind. Ebenso oder zusätzlich hierzu besteht die Möglichkeit, unterschiedliche Materialien für die Filtermedien 29 a und 29 b auszuwählen, um so das Filtermodul auf die jeweiligen Anforderungen, insbesondere auf die Art und Menge der abzuscheidenden Verunreinigungen, anzupassen.

Sobald die Filtermedien 29 a und 29 b mit Verunreinigungen beladen sind, wird das Filtermodul vorzugsweise zusammen mit dem Gehäuse 2, sofern dieses insbesondere aus Kunststoff besteht, ausgetauscht und durch ein identisches Filtermodul in einem Gehäuse ersetzt, bei dem lediglich die Filtermedien 29 a und 29 b nicht beladen sind. Das ausgetauschte Filtermodul kann nach Entfernen und Entsorgen der beladenen Filtermedien, ggf. Reinigung des Gehäuses sowie nach Neubestückung mit unbenutzten Filtermedien 29 a und 29 b beliebig oft wieder verwendet werden.

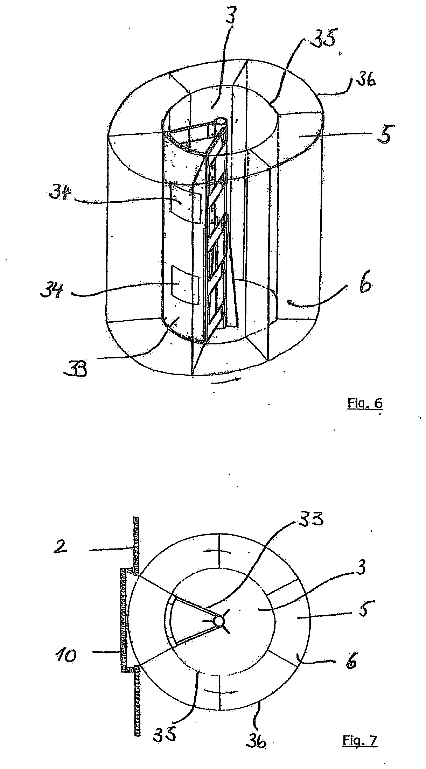

Die Figuren 6 und 7 bilden schematisch eine Weiterbildung der in den Figuren 1 bis 3, 8 und 9 gezeigten Halterungseinrichtung 5 ab, wobei zur besseren Darstellung in den Figuren 6 und 7 keine Filteranordnungen 6a bis 6e mit übereinander angeordneten Filtern abgebildet sind. Auch die in Figuren 6 und 7 dargestellte zylindrische Halterungseinrichtung 5 wird wie die in den Figuren 1 bis 3, 8 und 9 gezeigte Halterungseinrichtung 5 aus dem inneren Hohlzylinder 35 und dem äußeren Hohlzylinder 36 ausgebildet, wobei die in Figur 7 abgebildete Schnittansicht verdeutlicht, daß die kreisförmigen Grundflächen der beiden Zylinder als konzentrische Kreise angeordnet sind.

Innerhalb des inneren Hohlzylinders 35, der den Abführbereich 3 für gereinigte Luft bildet, ist ein Absperrelement 33 vorgesehen, das mit zwei beispielhaft gezeigten Öffnungen 34 (Figur 6) versehen ist. Die Größe der Öffnungen 34 ist individuell verstellbar ausgestaltet.

Das Absperrelement 33 ist als Kreissegment ausgestaltet und deckt den Abführbereich 3 für gereinigte Luft für eine Filteranordnung von übereinander angeordneten Filtern teilweise oder vollständig dann ab, wenn diese Filteranordnung sich in eine Position befindet, wie diese in Figur 7 gezeigt ist. Dies hat zur Folge, daß über das geöffnete Türelement 10 die mit abfiltrierten Verunreinigungen beladenen Filter durch das geöffnete Türelement 10 entnommen und durch nicht mit Verunreinigungen beladene Filter ersetzt werden können, ohne daß dabei Luft aus benachbarten Räumen in nennenswerter Menge abgesaugt wird.

Die Figur 9 bildet schematisch den Austausch ein mit Verunreinigungen beladenen Filters 9 gegen ein frisches, unbeladenes Filter 8 ab. Hierbei weist die insgesamt mit 1 bezeichnete Vorrichtung zum Filtrieren beispielhaft abgebildete zwei Halterungseinrichtungen 5 auf, die innerhalb des Gehäuses 2 angeordnet und jeweils einer von außen zugänglichen Öffnung 4 zugeordnet sind, wobei im Gegensatz zur vorstehenden Beschreibung der Vorrichtung 1 gemäß Figur 9 zwei Öffnungen 4 und zwei Türelemente 10 vorgesehen sind. Jedes Türelement 10 ist mittig geteilt, so daß dementsprechend die beiden Türflügel in Richtung auf den Außenrand des äußeren Zylinders 36 verschwenkbar sind, so daß hierdurch eine Abdichtung während des Wechseln der als Filtermodul ausgebildeten Filter 8 und 9 derart erfolgt, daß verschmutzte Luft aus dem Gehäuse nicht austreten kann.

Desweiteren ist dem Gehäuse 2 ein Schleusenraum 12 zugeordnet, der bei der gezeigten Ausführungsform sich sowohl über das linke als auch rechte Türelement hinaus erstreckt und der mittels einer verschiebbaren Tür 13, die sich vorzugsweise bei einer Annäherung automatisch öffnet, zu betreten bzw. zu verlassen ist.

Zum Austausch eines mit Schmutz beladenen Filtermoduls 9 wird dieses in der Halterungseinrichtung 5 nach Öffnen und Abdichten des Raumes zwischen Halterungseinrichtung 5 und Türelement 10 der entnommen und aus dem Schleusenraum 12 durch die verschiebbare Tür 13 heraus getragen. Hiernach wird ein unbeladenes Filtermodul 8 in die jeweilige leere Filteranordnung positioniert, wie dieser Teilarbeitsgang bei der rechten Halterungseinrichtung 5 in Figur 9 schematisch dargestellt ist. Da der Schleusenraum 12 bei dem zuvor beschriebenen Auswechseln die Vorrichtung 1 und die darin gehalterten Filter gegenüber der Umgebung staub- und verschmutzungsdicht absperrt, läßt sich ein Austausch der Filter 8, 9 ohne Unterbrechung des Filtrierens besonders einfach und verschmutzungsfrei bewerkstelligen.

Sollte vor dem Wechseln der Filter 8, 9 ein Abtrocknen der von dem jeweils auszutauschenden Filter abfiltrierten, feuchten Verunreinigungen erforderlich sein, wird die verschiebbare Tür 13 des Schleusenraumes 12 geschlossen, nachdem zuvor das entsprechende Türelement 10 so geöffnet worden ist, wie dies bei beiden Halterungseinrichtungen 5 in Figur 9 abgebildet ist. Die für die Trocknung erforderliche Luft wird dem Schleusenraum 12, beispielsweise aus einer benachbarten Halle, zugeführt. Abhängig von der Anzahl der vertikal übereinander angeordneten Filter können so alle übereinander angeordnete Filter der jeweiligen Filteranordnung (so zum Beispiel der mit 6d bezeichneten Filteranordnung beim linken Türelement) getrocknet werden.

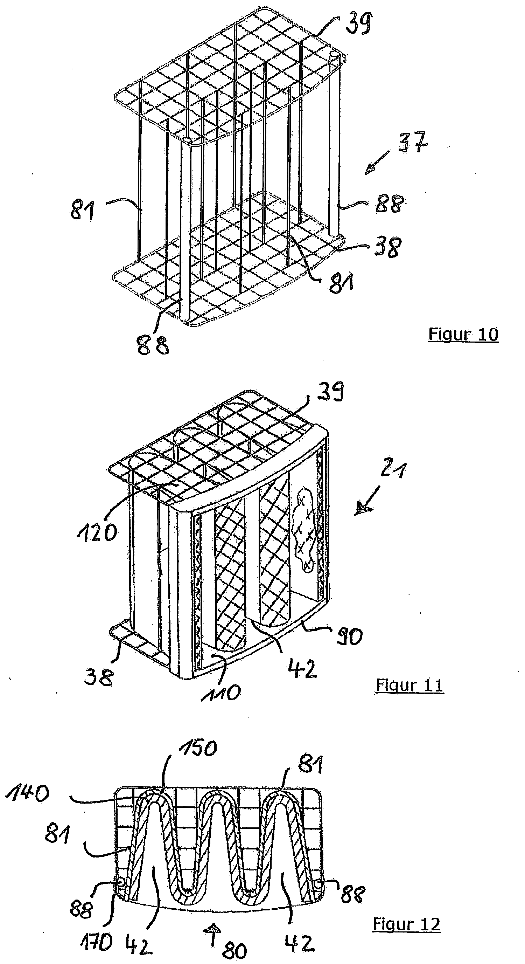

Die in den Figuren 10 bis 12 schematisch abgebildete Ausführungsform des insgesamt mit 21 (Figur 11) bezeichneten, nicht zur Erfindung gehörenden, Filtermoduls weist einen Grundkörper 37 auf, wie dieser in Figur 10 abgebildet ist. Dieser Grundkörper 37 besteht aus einer stegartig ausgebildeten Bodenfläche 38 und eine mit Abstand hiervon angeordnete Deckenfläche 39, wobei beide Flächen als Gitter ausgebildet sind. Die Bodenfläche 38 wird von der Deckenfläche 39 mittels Stege 81 auf Abstand gehaltert. An der Eintrittsseite 80 (Figur 12) der verunreinigten Luft weist der Grundkörper 37 zwei rohrförmige Griffelemente 88 auf, so daß beim Austausch, beim Transport und bei der Entsorgung der Grundkörper 37 mit davon gehalterten Taschenfilter 42 (Figuren 11 und 12) das Filtermodul 21 sicher manuell gehandhabt werden kann. Die Deckenfläche, die Bodenfläche und die Stege werden vorzugsweise aus einem runden Edelstahlmaterial angefertigt.

Wie den Figuren 11 und 12 zu entnehmen ist, weist die in den Figuren 10 bis 12 gezeigte zweite Ausführungsform des nicht zur Erfindung gehörenden Filtermoduls 21 drei Taschenfilter 42 auf, die einen angenäherten V-förmigen Querschnitt haben. Die Öffnung eines jeden Taschenfilters 42 weist zur Eintrittsseite 80 für verunreinigte Luft. Die Taschenfilter 42 sind jeweils endseitig, anströmseitig und seitlich durch entsprechend positionierte Stege 81, vorzugsweise aus rundem Edelstahl, gehaltert, wobei die Wandflächen der Taschenfilter 42 bei der gezeigten Ausführungsform eine innere Papierlage 140 und eine damit vernähte äußere Vlieslage 150 aufweisen.

Die Bodenfläche 110 und die Deckenfläche 120 des Taschenfilters 42 bestehen aus einer Vlieslage, die ihrerseits mit der äußeren Vlieslage 150 der Wandflächen vernäht ist. Durch die lösbare Fixierung der Taschenfilter 42 an den Stegen 81 wird sichergestellt, daß selbst bei einer extrem hohen Beladung mit abfiltrierten Verschmutzungen die Taschenfilter 42 in ihrer fixierten Lage verbleiben. Der jeweils äußeren Vlieslage 150 des linken und rechten Taschenfilters 42 ist eine weitere Schutzlage 170 zugeordnet, die bei der in Figur 11 gezeigten Ausführungsform um 180° umgeklappt ist. Ebenso ist die Bodenfläche 110 von allen drei Taschenfiltern 42 mit einer einstückig mit den Bodenflächen ausgebildeten Schutzlage 90 versehen, wobei auch diese um 180° umklappbar ist. Die weitere Schutzlage 170 sowie die Schutzlage 90 werden im umgeklappten Zustand durch eine nicht gezeigte Arretierung, beispielsweise eine Schnur, in der Position gehalten, wie sie in Figur 11 abgebildet ist. Wird nunmehr das in Figur 11 abgebildete Filtermodul 21 in ein entsprechend kastenförmiges Halterungselement 11 der zylindrischen Halterungseinrichtung 5 eingesetzt, so bilden die umgeklappten Schutzlagen 90 und 170 eine zusätzliche Dichtung aus, die verhindert, daß in unerwünschter Weise die zu filtrierende verunreinigte Luft seitlich am Filtermodul 21 vorbeiströmt.

Wie aus den Figuren 10 bis 12 zu entnehmen ist, ist die vordere, zur Eintrittsseite 80 für verunreinigte Luft weisende Kante des Filtermoduls 21 gekrümmt ausgebildet, wobei der Krümmungswinkel 97° beträgt. Diese gekrümmte vordere Kante ist mit der zuvor beschriebenen Schutzlage 170, die ihrerseits über die gekrümmte Kante so weit nach außen herausragt, daß sie um 180° umgeklappt werden kann, versehen. Auch alle nachfolgend noch beschriebenen Ausführungsformen des Filtermoduls sind mit dieser gekrümmten, mit einer Schutzlage versehenen Kante ausgebildet.

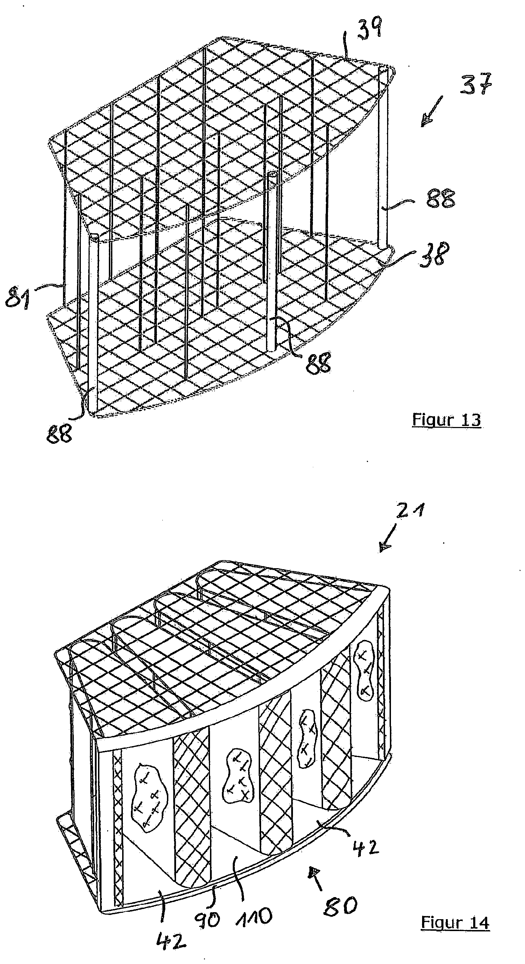

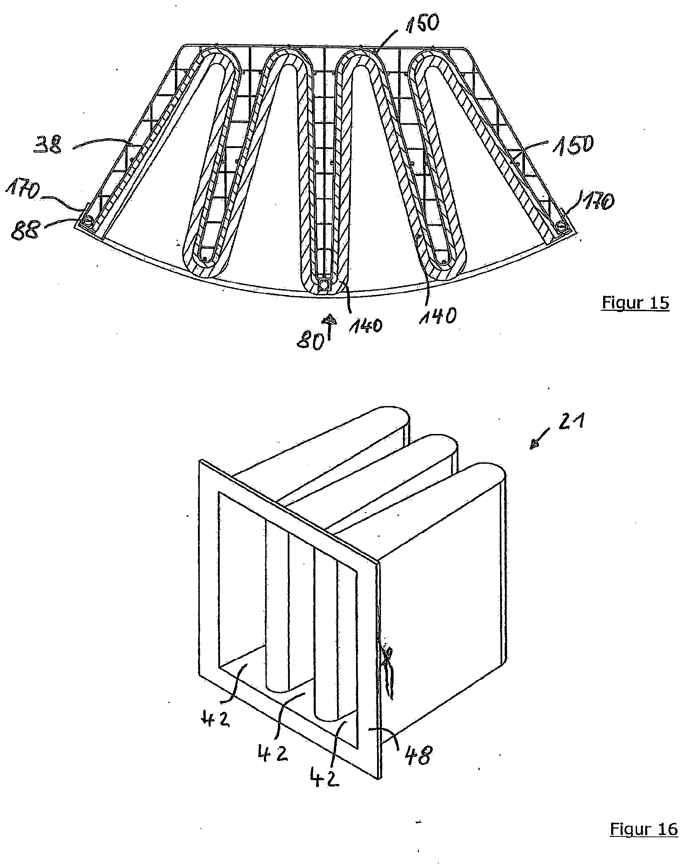

Die in den Figuren 13 bis 15 schematisch gezeigte dritte Ausführungsform des insgesamt mit 21 (Figur 14) bezeichneten, nicht zur Erfindung gehörenden, Filtermoduls weist einen Grundkörper 37 auf, wie dieser in Figur 13 abgebildet ist. Dieser Grundkörper 37 besteht aus einer stegartig ausgebildeten Bodenfläche 38 und eine mit Abstand hiervon angeordnete Deckenfläche 39, wobei beide Flächen als Gitter ausgebildet sind. Die Bodenfläche 38 wird von der Deckenfläche 39 mittels Stege 81 auf Abstand gehaltert. An der Eintrittsseite 80 (Figur 15) der verunreinigten Luft weist der Grundkörper 37 drei rohrförmige Griffelemente 88 auf, so daß beim Austausch, beim Transport und bei der Entsorgung der Grundkörper 37 mit darin gehalterten Taschenfilter 42 (Figuren 14 und 15) das Filtermodul 21 sicher gehandhabt werden kann. Die Deckenfläche und die Bodenfläche werden vorzugsweise aus einem runden Edelstahlmaterial angefertigt.

Wie den Figuren 13 und 14 zu entnehmen ist, weist die in den Figuren 13 bis 15 gezeigte dritte Ausführungsform vier Taschenfilter 42 auf, die einen angenäherten V-förmigen Querschnitt haben. Die Öffnung eines jeden Taschenfilters weist zur Eintrittsseite 80 für verunreinigte Luft. Die Taschenfilter 42 sind jeweils endseitig, anströmseitig und seitlich durch entsprechend positionierte Stege 81, vorzugsweise aus rundem Edelstahl, gehaltert, wobei die Wandflächen der Taschenfilter 42 bei der gezeigten Ausführungsform eine innere Papierlage 140 und eine damit vernähte äußere Vlieslage 150 aufweisen. Die innere Papierlage 140 ist in der Figur 14 nur teilweise abgebildet.

Die Bodenfläche und die Deckenfläche des Taschenfilters 42 bestehen aus einer Vlieslage, die ihrerseits mit der äußeren Vlieslage 150 der Wandflächen des Taschenfilters vernäht ist. Durch die lösbare Fixierung der Taschenfilter 42 an den Stegen 81 wird sichergestellt, daß selbst bei einer extrem hohen Beladung mit abfiltrierten Verschmutzungen die Taschenfilter 42 in ihrer fixierten Lage verbleiben. Der jeweils äußeren Wandfläche des linken und rechten Taschenfilters 42 ist eine weitere Schutzlage 170 zugeordnet, die bei der in Figur 14 gezeigten Ausführungsform um 180° umgeklappt ist. Ebenso ist die Bodenfläche 110 von allen vier Taschenfiltern 42 mit einer einstückig mit den Bodenflächen 110 ausgestaltete Schutzlage 90 versehen, wobei auch diese um 180° umgeklappt ist. Die weitere Schutzlage 170 sowie die Schutzlage 90 werden im umgeklappten Zustand durch eine nicht gezeigte Arretierung, beispielsweise eine Schnur, in der Position gehalten, wie sie in Figur 14 abgebildet ist. Wird nunmehr das in Figur 14 abgebildete Filtermodul 21 in ein entsprechendes kastenförmiges Halterungselement 11, wie es beispielsweise in Figur 8 abgebildet ist, eingesetzt, so bilden die umgeklappte Schutzlage 90 und die weitere Schutzlage 170 eine zusätzliche Dichtung aus, die verhindert, daß in unerwünschter Weise die zu filtrierende verunreinigte Luft seitlich am Filtermodul vorbeiströmt, wie dies bereits vorstehend bei der ersten Ausführungsform beschrieben ist. Ebenso weist die dritte Ausführungsform des Filtermoduls 42 nicht zwei sondern drei rohrförmige Griffelemente 88 auf, wodurch die Handhabung des relativ groß ausgebildeten Filtermoduls 42 entsprechend vereinfacht wird.

Die zuvor beschriebenen und in den Figuren 4, 5 sowie 10 bis 24 gezeigten Ausführungsformen des nicht zur Erfindung gehörenden Filtermoduls weisen alle eine zur Eintrittsseite für verunreinigte Luft bogenförmig gekrümmte Kante auf, während die hintere, zur Abführung der gereinigten Luft vorgesehene Kante geradlinig verläuft. Selbstverständlich ist es jedoch auch möglich, auch diese hintere Kante bogenförmig gekrümmt auszubilden.

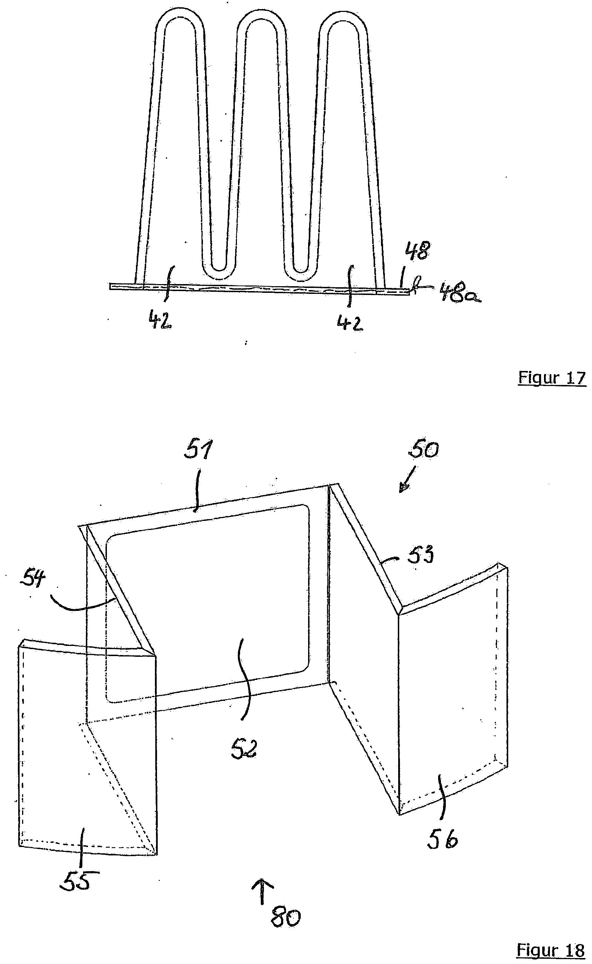

In den Figuren 16 und 17 ist eine vierte Ausführungsform eines nicht zur Erfindung gehörenden Filtermoduls 21 mit drei Taschenfiltern 42 abgebildet, wobei die vierte Ausführungsform im Gegensatz zu den zuvor beschriebenen anderen Ausführungsformen keinen Grundkörper aufweist. Vielmehr sind bei dieser Ausführungsform die Wandungen sowie die Boden- und Deckenflächen des Taschenfilters 42 aus einem solch dicken Vlies ausgebildet, wobei die Wandungen mit den Boden- und Deckenflächen des Taschenfilters 42, so zum Beispiel durch Vernähen oder Verkleben, verbunden, wodurch die erforderliche Steifigkeit aller Taschenfilter erreicht wird. Einstückig mit den äußeren Wandungen der äußeren Taschenfilter ist ein Kragenelement 48 ebenfalls aus Vliesmaterial vorgesehen, das zusätzlich über einen entsprechend geformten Rahmen (nicht gezeigt), vorzugsweise aus einem wasserfesten Material und insbesondere aus einem Edelstahlblech, abgestützt ist und das beispielsweise mittels einer Schnur 48a außen am Rahmen derartig befestigt ist, daß das Kragenelement 48 diesen Rahmen vor Verschmutzungen durch die zu filtrierende verunreinigte Luft schützt. Bei der in den Figuren 16 und 17 gezeigten vierten Ausführungsform werden alle zur verunreinigten Luft weisenden Flächen der Taschenfilter, mit Ausnahme der Flächen des Kragenelementes 48, mit mindestens einer, nicht abgebildeten Papiergelegeschicht versehen. Das in den Figuren 16 und 17 abgebildete Kragenelement ist rechteckig ausgebildet. Alternativ hierzu kann das Kragenelement 48 selbstverständlich entsprechend gekrümmt ausgestaltet sein, wobei die Krümmung so ausgebildet wird, wie dies beispielsweise in den Figuren 13 bis 15 für die vordere Kante abgebildet ist.

Soll die vierte Ausführungsform des Filtermoduls 21 durch eine zylindrische Halterungseinrichtung 5 mit einem inneren Hohlzylinder 35 und einem äußeren Hohlzylinder 36 verwendet werden, wie diese Halterungseinrichtung 5 vorstehend in Verbindung mit den Figuren 1 bis 3 und 6 bis 9 beschrieben ist, gelangt der nachfolgend im Zusammenhang mit der Figur 18 beschriebene Adapter zur Anwendung, da die in den Figuren 10 bis 12 sowie 16 und 17 beschriebenen Filtermodule einen rechteckigen vertikalen Querschnitt aufweisen.

Der in Figur 18 schematisch gezeigte Adapter 50 zur Halterung von als gerades Prisma mit einer viereckigen oder quadratischen Grundfläche ausgebildeten Filtermoduls weist an der Austrittsseite der gereinigten Luft einen Rahmen 51 auf, der mit einer entsprechenden Austrittsöffnung 52 versehen ist. Über zwei Seitenwände 53 und 54 ist der Rahmen 51 mit zwei, mit Abstand voneinander angeordneten Abdeckelementen 55 und 56 unter Ausbildung einer weiteren Öffnung verbunden. Die Krümmung der Abdeckelemente 55 und 56 entspricht der Krümmung des Mantels des äußeren Hohlzylinders 36. Die Größe des Rahmens 51 ist an das jeweils zu halternde Filtermodul (so zum Beispiel die zuvor in Verbindung mit den Figuren 10 bis 12 oder 16 und 17 beschriebenen Filtermodule) angepaßt und entspricht der Größe der weiteren Öffnung, so daß durch diesen Adapter 50 beispielsweise Filtermodule sicher an der zylindrischen Halterungseinrichtung 5 (Figuren 1 bis 3 und 6 bis 9) gehaltert werden können. Um eine Verschmutzung der Bereiche des Adapters, die mit verunreinigter Luft in Kontakt treten, zu verhindern, bietet es sich an, diese Bereiche mit einer Schutzlage aus einem wasserfesten Material, insbesondere einem Vlies, zu schützen.

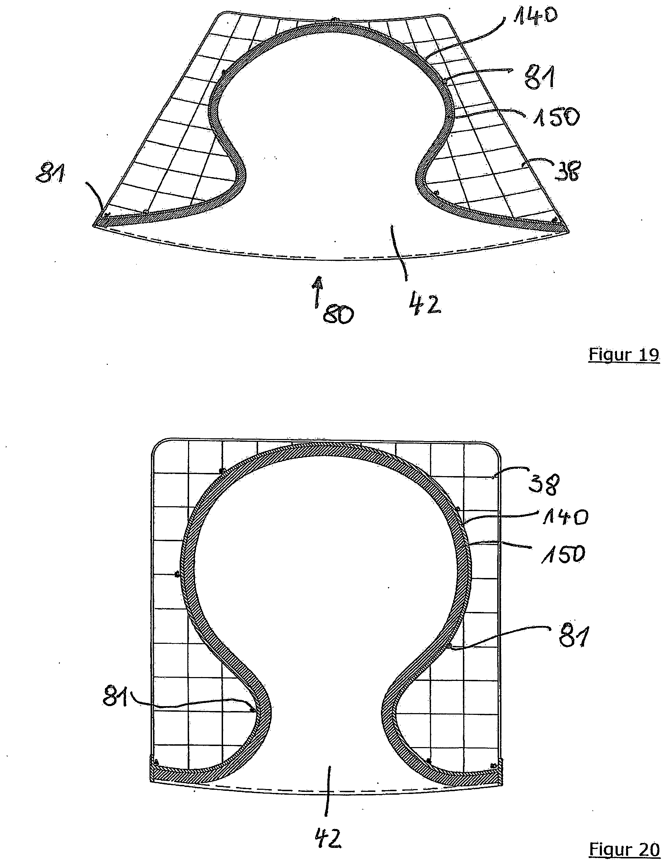

Die Figuren 19, 20 und 21 bilden drei Taschenfiltermodule ab, die einheitlich im Querschnitt gesehen Omega-förmig ausgeformt, jedoch unterschiedlich ausgestaltet sind. Die in den Figuren 19 bis 21 ausschließlich im Querschnitt gezeigten Ausführungsformen werden von einem Grundkörper gehaltert, wie dieser zuvor im Zusammenhang mit den Ausführungsformen gemäß der Figuren 10 bis 12 und 13 bis 15 beschrieben sind.

Anstelle des Grundkörpers können die in den Figuren 18 bis 21 gezeigten Ausführungsformen auch einen Aufbau besitzen, wie dieser vorstehend für die Ausführungsform beschrieben ist, die in den Figuren 16 und 17 abgebildet ist. In diesem Fall ist die Vliesschicht und die dieser zugeordneten oder damit verbundenen mindestens einen Papiergelegeschicht so ausgebildet, daß sie auch ohne Stützelemente während der Filtration ihre Form behält.

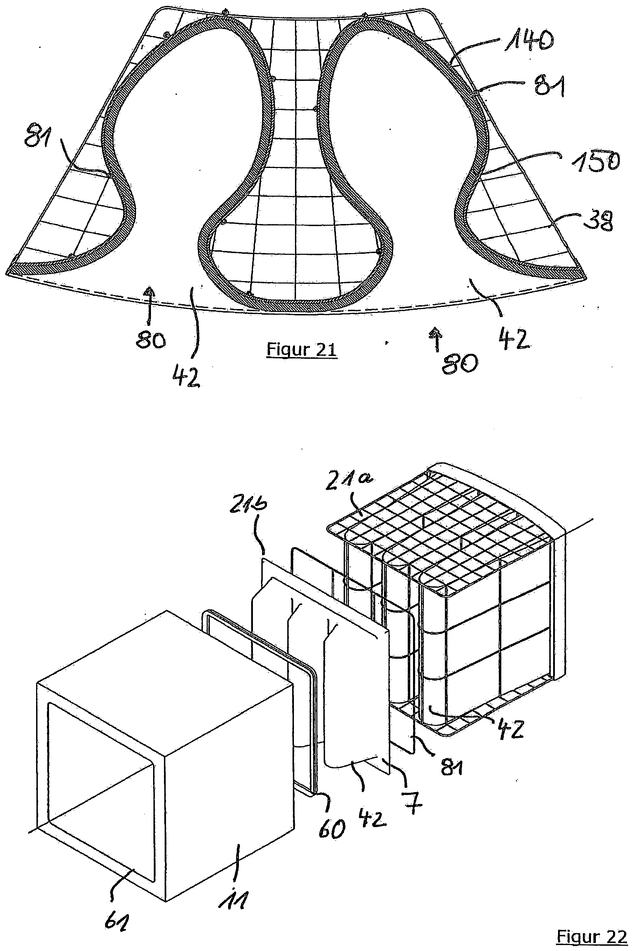

Die in den Figuren 22 bis 24 abgebildete weitere Ausführungsform eines insgesamt mit 21 bezeichneten, nicht zur Erfindung gehörenden, Filtermoduls weist einen ersten Bereich 21a auf, wobei dieser erste Bereich 21a so ausgebildet ist, wie dies eingangs für die zweite Ausführungsform des Filtermoduls anhand der Figuren 10 bis 12 im Detail beschrieben ist, so daß zur Vermeidung von Wiederholungen auf die diesbezügliche Beschreibung zu den Figuren 10 bis 12 verwiesen wird.

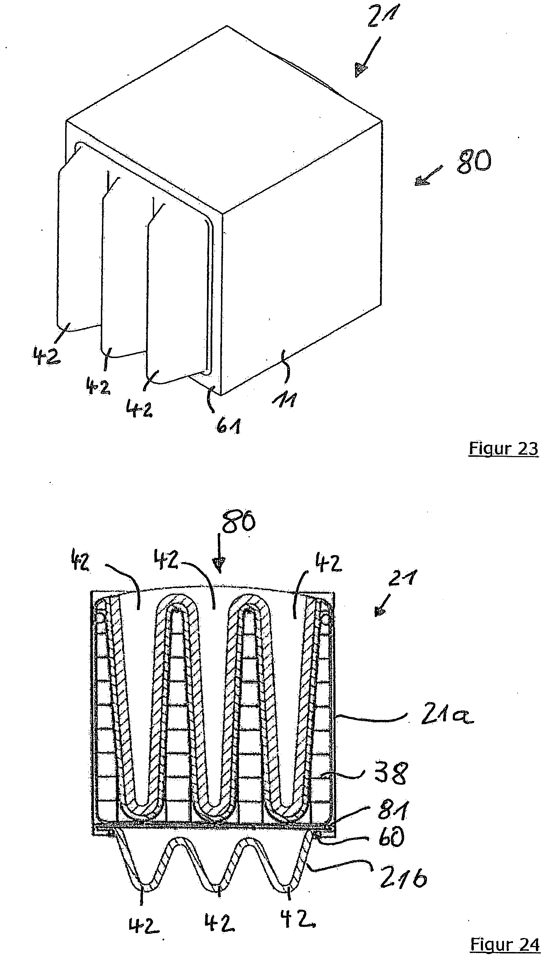

Zusätzlich ist bei der weiteren Ausführungsform gemäß Figur 22 ein kastenförmiges Halterungselement 11 vorgesehen, das den ersten Teil des Filtermoduls 21a in einer nicht gezeigten Vorrichtung 1, wie sie beispielsweise in den Figuren 1 bis 3 und 6 bis 9 beschrieben ist, haltert. Dieses kastenförmige Halterungselement 11 weist eine Deckenfläche, eine Bodenfläche sowie zwei Seitenflächen auf und besteht insbesondere aus einem Metallblech. Zusätzlich ist die in Figur 22 abgebildete Ausführungsform des Filtermoduls 21 mit einem zweiten Filtermodul 21b versehen, das als Feinfilter ausgebildet ist und das ebenfalls von dem kastenförmigen Halterungselement 11 gehaltert wird. Um den in den Figuren 23 und 24 zu erkennenden Gesamtaufbau zu realisieren, wird zunächst eine Dichtung 60 an dem Randbereich 61 des kastenförmiges Halterungselementes rückseitig (stromab der Taschenfilter 42) im gasdichten Eingriff befestigt. Hieraus erfolgt die Einlegung des ebenfalls aus drei als Taschenfilter 42 ausgebildeten Filter 7, die ihrerseits wiederum über ein mit Stegen 81 versehenes Spannteil derart kraftschlüssig gehaltert wird, derart, daß die Öffnungen der Filter 7 die bereits durch den Bereich 21a vorgereinigte Luft in diesem Gasstrom angeordnet sind. Durch Einschieben des ersten Teils 21a des Filtermoduls 21 wird der Zusammenbau des Filtermoduls 21 vollendet. Die Taschenfilter 42 des zweiten Teils 21b des Filtermoduls 21 werden, abhängig von der Art der Nachreinigung aus einem bezüglich der Luftdurchlässigkeit und damit der Abfiltrationsrate an die jeweiligen Anforderungen der Nachfiltration angepaßt und bestehen vorzugsweise aus einer diesbezüglich ausgewählten Vlieslage. Ansonsten ist der erste Teil 21a des Filtermoduls 21 so aufgebaut, wie dies vorstehend für die zweite Ausführungsform in Verbindung mit den Figuren 10 bis 13 beschrieben ist.

Die in den Figuren 22 bis 24 gezeigte weitere Ausführungsform des Filtermoduls erlaubt entweder den Austausch des ersten Teils 21a des Filtermoduls 21 oder den Austausch des zweiten Teils 21b oder den gemeinsamen Austausch vom ersten und zweiten Teil (21a und 21b) des Filtermoduls in besonders einfacher Weise.

Die in den Figuren 25 bis 27 gezeigte andere Ausführungsform des insgesamt mit 201 (Figur 26) gezeigten und nicht zur Erfindung gehörenden Filtermoduls weist einen Grundkörper 203 auf, wie dieser in Figur 25 abgebildet ist. Dieser Grundkörper 203 besteht aus einer Bodenfläche 206 und einer Deckenfläche 207, wobei die Bodenfläche 206 im Bereich der Eintrittsseite 208 (Figur 27) für verunreinigte Luft einen ersten Steg 226 und einen zweiten Steg 227 aufweist. Sowohl der Steg 226 der Bodenfläche 206 als auch der mit dem Steg 226 identisch ausgebildete Steg 228 der Deckenfläche 207 sind bogenförmig gekrümmt, wobei die bogenförmige Krümmung der Stege 226 und 228 einen Krümmungswinkel zwischen 92° und 105°, vorzugsweise einen Krümmungswinkel zwischen 94° und 98°, aufweist.

Mit Abstand von den ersten Stegen 226 und 228 der Bodenfläche 206 und der Deckenfläche 207 des Grundkörpers 203 sind stromab der Eintrittsseite 208 (Figur-27) für verunreinigte Luft zwei geradlinig verlaufende zweite waagerechte Stege 227 und 227a angeordnet, so daß die Deckenfläche 207 und die Bodenfläche 206 des Grundkörpers 203 identisch ausgestaltet sind. Rückseitig des Grundkörpers 203 ist ferner ein geradlinig verlaufender waagerechter dritter Steg 236 vorgesehen.

Die jeweiligen ersten Stege 226 und 228 der Bodenfläche 206 und der Deckenfläche 207 weisen einen Abschnitt auf, der aus zwei Federelementen besteht, die als U-förmig ausgestaltete Biegefedern 237 und 238 ausgebildet sind. Auch diese Biegefedern sind identisch ausgebildet und an den selben Stellen in den Stegen 226 und 228 vorgesehen.

Die äußeren Seitenrahmen des Grundkörpers 203, der die Stege 239 und 233 umfaßt, wird aus zwei identisch geformten Teilen hergestellt, die auf der Höhe der geradlinig verlaufenden Stege 227 und 227 a zusammen mit diesen gemeinsam verbunden, insbesondere verschweißt, sind.

Zwischen dem so hergestellten Grundkörper 203 werden pro Taschenfilter 205 zwei Stege 234 angeordnet, so daß dementsprechend bei der in den Figuren 25 bis 27 gezeigten anderen Ausführungsform des Grundkörpers 203, der drei Taschenfilter 205 durch Befestigung an ihren jeweiligen Außenwänden, beispielsweise durch entsprechende Clips, durch Klettbänder oder durch Vernähen, haltert, sechs identisch geformte und mit Abstand voneinander angeordnete Stege 234 vorhanden sind. Jeder dieser sechs Stege 234 weist bei der anderen Ausführungsform (Figuren 25 bis 27) jeweils einen Abschnitt auf, der als V-förmige Biegefeder 235 ausgebildet ist. Ebenso ist jeder Steg 234 im Bereich der Deckenfläche 207 und im Bereich der Bodenfläche 206 mit den beiden ersten Stegen 226 und 228 verbunden und vorzugsweise verschweißt, wobei die jeweils außen angeordneten beiden Stege 234 gleichzeitig die vordere linke und rechte anströmseitig vorgesehene Kante der Seitenflächen des Grundkörpers 203 ausbilden.

Wie den Figuren 26 und 27 zu entnehmen ist, weist die in den Figuren 25 bis 27 gezeigte andere Ausführungsform des Filtermoduls 201 drei Taschenfilter 205 auf, die einen angenäherten V-förmigen Querschnitt haben. Die Öffnung eines jeden Taschenfilters 205 weist zur Eintrittsseite 208 für verunreinigte Luft (Figur 27). Die Taschenfilter 205 sind jeweils anströmseitig und seitlich durch die Stege 234 gehaltert, wobei alle Taschenfilter 205 der in den Figuren 26 und 27 gezeigten Ausführungsform eine innere Papierlage 214 (nur teilweise abgebildet) und eine damit vernähte äußere Vlieslage 215 aufweisen.

Die Bodenfläche 211 und die Deckenfläche 212 des Taschenfilters 205 bestehen aus einer Vlieslage, die ihrerseits mit der äußeren Vlieslage 215 der Wandflächen 210 vernäht ist. Durch die lösbare Fixierung der Taschenfilter 205 an den Stegen 234 wird sichergestellt, daß selbst bei einer extrem hohen Beladung mit abfiltrierten Verschmutzungen die Taschenfilter 205 in ihrer fixierten Lage verbleiben. Der jeweils äußeren Wandfläche 210 des linken und rechten Taschenfilters 205 ist eine weitere Schutzlage 217 zugeordnet, die bei der in Figur 26 gezeigten Ausführungsform um 180° umgeklappt ist. Ebenso ist die Bodenfläche 211 von allen drei Taschenfiltern 205 mit einer einstückig mit den Bodenflächen ausgebildeten Schutzlage 209 versehen, wobei auch diese um 180° umgeklappt ist. Die weitere Schutzlage 217 sowie die Schutzlage 209 werden im umgeklappten Zustand durch eine nicht gezeigte Arretierung, beispielsweise eine Schnur, in der Position gehalten, wie sie in Figur 16 abgebildet ist. Wird nunmehr das in Figur 26 abgebildete Filtermodul 201 in ein entsprechendes Gehäuse 219, wie es beispielsweise in Figur 22 (dort bezeichnet mit 11) abgebildet ist, eingesetzt, so bilden die umgeklappten Schutzlagen 209 und 217 eine zusätzliche Dichtung aus, die verhindert, daß in unerwünschter Weise die zu filtrierende verunreinigte Luft seitlich am Filtermodul vorbeiströmt.

Bedingt dadurch, daß der Grundkörper 203 die Biegefedern 237 und 238 und die V-förmigen Biegefedern 235 aufweist, ist der Grundkörper im Bereich der Eintrittsseite 208 für verunreinigte Luft sowohl in seiner Höhe als auch in seiner Breite elastisch verformbar, so daß die beiden miteinander verbundenen Schutzlagen 209 und 217 kragenartig über den Eintrittsbereich besonders einfach gestülpt werden können, wie dies in Figur 26 gezeigt ist. Diese elastische Verformung in der Höhe und in der Breite des Grundkörpers 203 erleichtert auch die Anordnung und Entfernung des Filtermoduls 201 in bzw. aus dem in Figur 22 beispielhaft gezeigten und vorstehend beschriebenen Gehäuse 11, wobei gleichzeitig die Schutzlagen 209 und 217 als zusätzliche Dichtung wirken, so daß keine verschmutzte Luft kopf- und fußseitig sowie seitlich das Filtermodul umströmen kann. Hierdurch wird auch besonders wirksam verhindert, daß Verschmutzungen und insbesondere Lackreste eine unerwünschte Verklebung des Fitermoduls mit den angrenzenden Wandungen des Gehäuses bewirken.

Um den in Figur 25 gezeigten Grundkörper herzustellen, werden zunächst zwei identisch geformte Grundkörperteile (unteres und oberes Grundkörperteil) durch Biegen eines entsprechenden Edelstahldrahtes mit einer Stärke zwischen 1,5 mm und 4 mm erstellt, wobei jedes Grundkörperteil die Stege 226 bzw. 228 und 239 bzw. 233 umfaßt.

Der untere Grundkörperteil wird mit dem oberen Grundkörperteil, der zuvor um 180° gedreht wurde, zusammen mit dem Steg 236 verschweißt und ist zusätzlich durch den unteren Steg 227 und den oberen Steg 227a ausgesteift. Hiernach werden sechs identische Stege 234 unter Ausbildung der V-förmigen Biegefeder 235 gebogen und mit gleichem Abstand in die Rohkonstruktion des Grundkörpers mit dem unteren Steg 226 und dem oberen Steg 228 unter Ausbildung des Grundkörpers 203 (Figur 25) verschweißt.

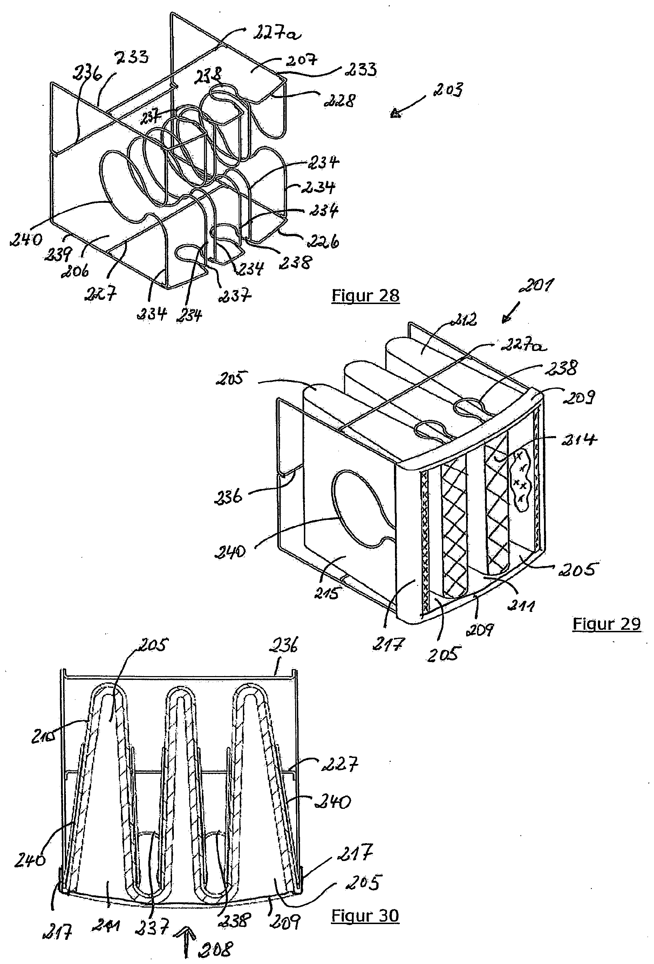

Die in den Figuren 28 bis 30 abgebildete weitere Ausführungsform des Filtermoduls entspricht mit Ausnahme der Gestaltung der Biegefeder 235, die bei der anderen Ausführungsform V-förmig 235 und bei der weiteren Ausführungsform Ω-förmig 240 ausgestaltet ist, und den Biegefedern 237 und 238, die bei der Ausführungsform gemäß Figuren 25 bis 27 U-förmig und bei der weiteren Ausführungsform Ω-förmig ausgebildet sind, der anderen Ausführungsform gemäß Figuren 25 bis 27, so daß die zuvor zur anderen Ausführungsform wiedergegebenen Ausführungen auch für die weitere Ausführungsform gemäß der Figuren 28 bis 30 gelten.

Durch Variation der Länge der Stege 236, 227 und 227a läßt sich die Grundform des Grundkörpers beliebig an die Form und Größe des jeweiligen Gehäuses anpassen, so daß sich ein derartig angepaßtes Filtermodul auch in die an sich bekannte Filterwand, die rechteckige Gehäuse zur Aufnahme von Filtermodulen aufweist, einsetzen läßt.

Ebenso lassen sich die zuvor beschriebenen Filtermodule in einer Vorrichtung mit einer zylindrischen Halterungseinrichtung verwenden, wie diese vorstehend beschrieben und beispielhaft in den Figuren 1 bis 3 sowie Figuren 8 und 9 abgebildet ist. Hierbei werden die benötigten Filtermodule in einem kastenförmigen Halterungselement 11 (Figur 8) angeordnet, wobei eine Vielzahl der so gehalterten Filtermodule von der gemeinsamen Halterungseinrichtung 5 als Filter 7 gehaltert werden (Figur 8).

Ferner ist es jedoch auch möglich, daß die zuvor beschriebenen nicht zur Erfindung gehörenden Filtermodule, so zum Beispiel die in den Figuren 10 bis 12, 16, 17, 22 sowie 25 bis 30 mittels des vorstehend im Zusammenhang mit der Figur 18 beschriebenen Adapters 50 in einer entsprechenden zylindrischen Halterungseinrichtung 5 gehaltert werden.

## Patentansprüche

1. Vorrichtung zum Filtrieren von verunreinigter Luft, insbesondere zum Filtrieren der verunreinigten Luft in oder aus Lackieranlagen, mit einem Gehäuse, das mit einem Zuführbereich für die verunreinigte Luft, mit einem von dem Zuführbereich abgetrennten Abführbereich für gereinigte Luft, mit mindestens einer von außen zugänglichen Öffnung und mit mindestens einer zylindrischen Halterungseinrichtung für mindestens zwei Filteranordnungen versehen ist, wobei jede Filteranordnung mindestens ein Filter aufweist, wobei die Halterungseinrichtung (5) über hieran angeordnete Halterungselemente (11) die in den mindestens zwei Filteranordnungen (6, 6a bis 6e) vorgesehenen Filter (7) lösbar haltert und die Halterungseinrichtung (5) zwischen einer ersten Betriebsstellung und einer zweiten Betriebsstellung und umgekehrt hierzu durch Drehung bewegbar ist, wobei in der ersten Betriebsstellung der Halterungseinrichtung (5) die verunreinigte Luft die Filter (7) der mindestens zwei Filteranordnungen (6, 6a bis 6e) durchströmt und wobei in der zweiten Betriebsstellung der Halterungseinrichtung (5) die verunreinigte Luft das mindestens eine Filter (7) der mindestens einen Filteranordnung (6a bis 6e) durchströmt, während gleichzeitig das mindestens eine, mit abfiltrierten Verunreinigungen beladene Filter (7) der mindestens einen anderen Filteranordnung (6) durch die von außen zugängliche mindestens eine Öffnung (4) im Gehäuse (2) entnehmbar und durch mindestens ein mit abfiltrierten Verunreinigungen nicht beladenes Filter (7) ersetzbar ist, **dadurch gekennzeichnet,**
a) **daß** die Wandung der zylindrischen Halterungseinrichtung (5) durch einen inneren Hohlzylinder (35) und einen mit gleichem Abstand davon angeordneten äußeren Hohlzylinder (36) ausgebildet ist,
b) **daß** der radiale Abstand der beiden Hohlzylinder (35, 36) auf die Länge des jeweiligen Filters (7) derart abgestimmt ist, daß die Filter (7) durch den zwischen den beiden Hohlzylindern (35, 36) ausgebildeten Ringraum gehaltert sind,
c) **daß** der Ringraum gleichmäßig über seinen Umfang verteilte Halterungselemente (11) für identisch ausgestaltete Filter (7) aufweist,
d) **daß** jedes Filter stirnseitig jeweils zum inneren und äußeren Hohlzylinder mit einer Luftdurchtrittsöffnung versehen ist und die Luftdurchtrittsöffnungen mit den im Mantel des inneren (35) und äußeren Hohlzylinders (36) vorgesehenen Öffnungen fluchten, und
e) **daß** die gereinigte Luft fußseitig über den kopfseitig geschlossenen inneren Hohlzylinder (35) oder kopfseitig über den fußseitig geschlossenen inneren Hohlzylinder (35) über ein, einen geringen Sog bei einem Wechsel des beladenen Filters zumindest im Bereich der Öffnung (4) des Gehäuses (2) erzeugendes Sauggebläse abgezogen wird.

2. Vorrichtung nach Anspruch 1, **dadurch gekennzeichnet, daß** die von außen zugängliche Öffnung (4) im Gehäuse (2) mit einem Türelement (10) versehen ist.

3. Vorrichtung nach einem der Ansprüche 1 oder 2, **dadurch gekennzeichnet, daß** die Halterungseinrichtung (5) durch Drehung aus der ersten Betriebsstellung in die zweite Betriebsstellung und aus der zweiten Betriebsstellung in die erste Betriebsstellung bewegbar ist und daß die Halterungseinrichtung (5) in eine dritte Betriebsstellung bringbar ist, in der die Halterungseinrichtung mit einer einstellbaren Geschwindigkeit gedreht wird.

4. Vorrichtung nach einem der Ansprüche 1 bis 3, **dadurch gekennzeichnet, daß** die Halterungseinrichtung (5) derart dimensioniert und ausgestaltet ist, daß die Halterungseinrichtung (5) über ihre Höhe gesehen mindestens eine erste Filteranordnung (6, 6a bis 6e) mit einer Reihe von übereinander angeordneten Filtern (7) und mindestens eine zweite Filteranordnung (6, 6a bis 6e) mit einer Reihe von übereinander angeordneten Filtern (7) aufweist.

5. Vorrichtung nach Anspruch 4, **dadurch gekennzeichnet, daß** die Halterungseinrichtung zwei bis zwölf Filteranordnungen (6, 6a bis 6e), vorzugsweise drei bis acht Filteranordnungen (6, 6a bis 6e), aufweist.

6. Vorrichtung nach Anspruch 4 oder 5, **dadurch gekennzeichnet, daß** jede Filteranordnung (6, 6a bis 6e) zwischen einem und acht Filter (7), vorzugsweise zwischen zwei bis sechs Filter (7), aufweist.

7. Vorrichtung nach einem der Ansprüche 4 bis 6, **dadurch gekennzeichnet, daß** nebeneinander liegende Filter (7) von nebeneinander vorgesehenen Filteranordnungen (6, 6a bis 6e) auf der selben Höhe positioniert sind.

8. Vorrichtung nach Anspruch 1, **dadurch gekennzeichnet, daß** dem Ringraum kastenförmige Halterungselemente (11) zugeordnet sind, daß jedes Halterungselement eine geschlossene Decken- und Bodenfläche, zwei gegenüberliegende geschlossene Seitenflächen und zwei mit den Luftdurchtrittsöffnungen versehene gegenüberliegende Stirnflächen aufweisen, wobei die äußere bogenförmigen Stirnfläche in ihrer Krümmung an die Krümmung der Mantelfläche des äußeren Hohlzylinders (36) und/oder die innere bogenförmige Stirnfläche an die Krümmung der Mantelfläche des inneren Hohlzylinders (35) angepaßt ist bzw. sind.

9. Vorrichtung nach einem der vorangehenden Ansprüche, **dadurch gekennzeichnet, daß** jedes Filter als Filtermodul (21) ausgebildet ist und jedes Filtermodul (21) eine geschlossene Decken- (22) und Bodenfläche (23), zwei gegenüberliegende geschlossene Seitenflächen (24) und zwei mit Luftdurchtrittsöffnungen versehene gegenüberliegende Stirnflächen (25, 26) aufweist, wobei die äußere bogenförmigen Stirnfläche (25) in ihrer Krümmung an die Krümmung der Mantelfläche des äußeren Hohlzylinders (36) und/oder die innere bogenförmige Stirnfläche (26) an die Krümmung der Mantelfläche des inneren Hohlzylinders (35) angepaßt sind, und daß jedes Filtermodul (21) durch die im Ringraum vorgesehene Halterungselemente (11) kraft- und/oder formschlüssig gehaltert ist.

10. Vorrichtung nach Anspruch 9, **dadurch gekennzeichnet, daß** die das Gehäuse des Filtermoduls (21) bildenden Flächen (22 bis 24) aus einem wiederverwendbaren Material, vorzugsweise aus einem Kunststoff, ausgebildet sind.

11. Vorrichtung nach Anspruch 10, **dadurch gekennzeichnet, daß** innerhalb des Filtermoduls (21) Befestigungselemente zur lösbaren Halterung von mindestens einem Filtermedium (29a, 29b) vorgesehen sind.

12. Vorrichtung nach einem der Ansprüche 9 bis 11, **dadurch gekennzeichnet, daß** innerhalb des Gehäuses des Filtermoduls (21) unterschiedliche Filtermedien (29a, 29b) angeordnet sind.

13. Vorrichtung nach einem der Ansprüche 9 bis 12, **dadurch gekennzeichnet, daß** innerhalb des Gehäuses des Filtermoduls (21) unterschiedlich geformte und/oder angeordnete Filtermedien (29a, 29b) vorgesehen sind.

14. Vorrichtung nach einem der vorangehenden Ansprüche, **dadurch gekennzeichnet, daß** jedes in der zylindrischen Halterungseinrichtung anzuordnende Filter als Filtermodul (21) ausgebildet und mindestens ein Taschenfilter (42) aufweist, daß jedes Taschenfilter (42) einen aus Stegen (81) ausgebildeten Grundkörper (37) aus einem wasserfesten Material mit einer Bodenfläche (38), einer Deckenfläche (39) und zwei gegenüberliegenden Seitenflächen (40) aufweist, wobei die Seitenflächen (40) senkrecht zur Boden- (38) und Deckenfläche (39) angeordnet sind und daß innerhalb des Grundkörpers (37) wenigstens ein Stützelement (41) zur Befestigung und/oder Halterung des wenigstens einen Taschenfilters (42) vorgesehen ist.

15. Vorrichtung nach Anspruch 14, **dadurch gekennzeichnet, daß** die Bodenfläche (38) und Deckenfläche (39) des Grundkörpers (37) an der Eintrittsseite (8, 80) der verunreinigten Luft und/oder an der Austrittsseite der gereinigten Luft bogenförmig gekrümmt ausgebildet ist bzw. sind, wobei die bogenförmige Krümmung an der Eintrittsseite an die Krümmung des Mantels des äußeren Hohlzylinders (36) und/oder die bogenförmige Krümmung an der Austrittsseite an die Krümmung des Mantels des inneren Hohlzylinders (35) angepaßt sind.

16. Vorrichtung nach Anspruch 14 oder 15, **dadurch gekennzeichnet, daß** das Stützelement (41) für das Taschenfilter (42) einen U-förmigen, einen Omega-förmigen oder einen V-förmigen Querschnitt aufweist und aus Metallstegen ausgebildet ist.

17. Vorrichtung nach einem der Ansprüche 14 bis 16, **dadurch gekennzeichnet, daß** das Stützelement (41) mit senkrechten auf der Bodenfläche (38) und/oder an der Deckenfläche (39) angeordneten gitterartigen Metallstege (81) versehen ist.

18. Vorrichtung nach einem der Ansprüche 14 bis 17, **dadurch gekennzeichnet, daß** die innerhalb des Grundkörpers (37) angeordneten Taschenfilter (42) über Distanzelemente (45) an benachbarten Stützelementen (41) kraft- und/oder formschlüssig gehaltert sind.

19. Vorrichtung nach Anspruch 14 oder 15, **dadurch gekennzeichnet, daß** das Stützelement für das mindestens eine Taschenfilter (42) aus einzelnen Stegen (81) aus dem wasserfesten Material, insbesondere aus Metallstegen, ausgebildet ist.

20. Vorrichtung nach Anspruch 19, **dadurch gekennzeichnet, daß** die Bodenfläche (38) mit der Deckenfläche (39) des Grundkörpers (37) über einzelne, vorzugsweise senkrecht angeordnete Metallstege (81), die das Stützelement für das mindestens eine Taschenfilter (42) ausbilden, verbunden ist.

21. Vorrichtung nach einem der Ansprüche 14 bis 20, **dadurch gekennzeichnet, daß** jedes Taschenfilter (42) als Filtermedium mindestens eine innere, zur verunreinigten Luft weisenden Papiergelegeschicht (44, 140) und mindestens eine damit zusammenwirkende Vliesschicht (43, 150) aufweist.

22. Vorrichtung nach einem der Ansprüche 14 bis 21, **dadurch gekennzeichnet, daß** der Grundkörper (37)als gerades Prisma mit einer viereckigen oder quadratischen Grundfläche ausgebildet ist und daß der Eintrittsseite für die verunreinigte Luft ein Adapter (50) zugeordnet ist, der beidseitig der Eintrittsseite (8, 80) für verunreinigte Luft angeordnete Abdeckelemente (55, 56) aufweist, die die zwischen benachbarten Filtern (7) oder Filtermodulen (42) befindlichen Flächen abdecken.

23. Vorrichtung nach einem der vorangehenden Ansprüche, **dadurch gekennzeichnet, daß** dem inneren Hohlzylinder (35) der zylindrischen Halterungseinrichtung (5) ein die Austrittsöffnung (52) für gereinigte Luft vollständig oder teilweise verschließendes Absperrelement (33) zugeordnet ist.

24. Vorrichtung nach einem der vorangehenden Ansprüche, **dadurch gekennzeichnet, daß** der Zuführbereich (8) für verunreinigte Luft eine Lackieranlage bildet und daß die Lackieranlage oberhalb des Gehäuses (2) angeordnet ist und daß der Bodenbereich der Lackieranlage und/oder der Deckenbereich des Gehäuses (2) den Zuführbereich (8, 80) für verunreinigte Luft ausbilden.

25. Vorrichtung nach einem der vorangehenden Ansprüche, **dadurch gekennzeichnet, daß** dem Filter (7), der Filteranordnung (6, 6a bis 6e), dem Filtermodul (21) und/oder dem Abführbereich für gereinigte Luft (3) mindestens ein Sensor zur Erfassung der Strömungsgeschwindigkeit, ein Sensor zur Erfassung der Feuchtigkeit der gereinigten Luft und/oder ein optischer Sensor zugeordnet ist bzw. sind.

## Claims

1. A device for filtering polluted air, in particular for filtering the polluted air into or out of enamelling lines (painting installations), with a housing which is provided with a feed area for the polluted air, with a discharge area for cleaned air separated from the feed area, with at least one opening accessible from the outside and with at least one cylindrical holding device for at least two filter arrangements, wherein each filter arrangement comprises at least one filter, the holding device (5) releasably holds the filters (7) provided in the at least two filter arrangements (6, 6a to 6e) via holding elements (11) arranged thereon, and the holding device (5) is movable between a first operating position and a second operating position and vice versa thereto by rotation, wherein in the first operating position of the holding device (5) the contaminated air flows through the filters (7) of the at least two filter arrangements (6, 6a to 6e) and wherein in the second operating position of the holding device (5) the contaminated air flows through the at least one filter (7) of the at least one filter arrangement (6a to 6e), while at the same time the at least one filter (7), loaded with filtered impurities, of the at least one other filter arrangement (6) can be removed through the at least one opening (4) in the housing (2), which is accessible from the outside, and can be replaced by at least one filter (7) not loaded with filtered impurities, **characterised**
a) **in that** the wall of the cylindrical holding device (5) is formed by an inner hollow cylinder (35) and an outer hollow cylinder (36) being arranged at an equal distance therefrom,
b) **in that** the radial distance between the two hollow cylinders (35, 36) is matched to the length of the respective filter (7) in such a way that the filters (7) are held by the annular space formed between the two hollow cylinders (35, 36),
c) **in that** the annular space has holding elements (11) for identically designed filters (7) which are distributed evenly over its circumference,
d) **in that** each filter is provided with an air passage opening on the end face in each case to the inner and outer hollow cylinder and the air passage openings are aligned with the openings provided in the casing of the inner (35) and outer hollow cylinder (36), and
e) **in that** the cleaned air is drawn off at the foot end via the inner hollow cylinder (35) closed at the head end or at the head end via the inner hollow cylinder (35) closed at the foot end via a suction fan producing a slight suction when changing the loaded filter at least in the region of the opening (4) of the housing (2).

2. The device according to claim 1, **characterised in that** the opening (4) in the housing (2) accessible from the outside is provided with a door element (10).

3. The device according to one of claims 1 or 2, **characterised in that** the holding device (5) can be moved by rotation from the first operating position into the second operating position and from the second operating position into the first operating position and that the holding device (5) can be brought into a third operating position in which the holding device is rotated at an adjustable speed.

4. The device according to one of claims 1 to 3, **characterised in that** the holding device (5) is dimensioned and designed in such a way that the holding device (5), viewed over its height, has at least one first filter arrangement (6, 6a to 6e) with a row of filters (7) arranged one above the other and at least one second filter arrangement (6, 6a to 6e) with a row of filters (7) arranged one above the other.

5. The device according to claim 4, **characterised in that** the holding device comprises two to twelve filter arrangements (6, 6a to 6e), preferably three to eight filter arrangements (6, 6a to 6e).

6. The device according to claim 4 or 5, **characterised in that** each filter arrangement (6, 6a to 6e) comprises between one and eight filters (7), preferably between two to six filters (7).

7. The device according to one of claims 4 to 6, **characterised in that** filters (7) of filter arrangements (6, 6a to 6e) provided next to each other are positioned at the same height.

8. The device according to claim 1, **characterised in that** box-shaped mounting elements (11) are associated with the annular space, **in that** each mounting element has a closed top and bottom surface, two opposite closed side surfaces and two opposite end surfaces provided with the air passage openings, wherein the curvature of the outer arcuate end face is adapted to the curvature of the circumferential surface of the outer hollow cylinder (36) and/or the inner arcuate end face is adapted to the curvature of the circumferential surface of the inner hollow cylinder (35).

9. The device according to one of the preceding claims, **characterised in that** each filter is designed as a filter module (21) and each filter module (21) has a closed top (22) and bottom surface (23), two opposite closed side surfaces (24) and two opposite end surfaces (25, 26) provided with air passage openings, wherein the outer arcuate end face (25) is adapted in its curvature to the curvature of the circumferential surface of the outer hollow cylinder (36) and/or the inner arcuate end face (26) is adapted to the curvature of the circumferential surface of the inner hollow cylinder (35), and that each filter module (21) is non-positively and/or positively held by the holding elements (11) provided in the annular space.

10. The device according to claim 9, **characterised in that** the surfaces (22 to 24) forming the housing of the filter module (21) are made of a reusable material, preferably of a plastic.

11. The device according to claim 10, **characterised in that** fastening elements are provided inside the filter module (21) for the detachable mounting of at least one filter medium (29a, 29b).

12. The device according to one of claims 9 to 11, **characterised in that** different filter media (29a, 29b) are arranged inside the housing of the filter module (21).

13. The device according to one of claims 9 to 12, **characterised in that** differently shaped and/or arranged filter media (29a, 29b) are provided inside the housing of the filter module (21).

14. The device according to one of the preceding claims, **characterised in that** each filter to be arranged in the cylindrical holding device is designed as a filter module (21) and has at least one pocket filter (42), **in that** each pocket filter (42) has a base body (37) made of a water-resistant material and formed from webs (81) with a bottom surface (38), a base body (37) having a top surface (39) and two opposite side surfaces (40), the side surfaces (40) being arranged perpendicularly to the bottom (38) and top (39) surfaces, and **in that** at least one support element (41) for fastening and/or holding the at least one pocket filter (42) is provided inside the base body (37).

15. The device according to claim 14, **characterised in that** the bottom surface (38) and the top surface (39) of the base body (37) is curved in an arc shape on the inlet side (8, 80) of the contaminated air and/or on the outlet side of the cleaned air. the arc-shaped curvature on the inlet side being adapted to the curvature of the shell of the outer hollow cylinder (36) and/or the arc-shaped curvature on the outlet side being adapted to the curvature of the shell of the inner hollow cylinder (35).

16. The device according to claim 14 or 15, **characterised in that** the support element (41) for the pocket filter (42) has a U-shaped, an omega-shaped or a V-shaped cross-section and is formed from metal webs.

17. The device according to one of claims 14 to 16, **characterised in that** the supporting element (41) is provided with vertical grid-like metal webs (81) arranged on the bottom surface (38) and/or on the ceiling surface (39).

18. The device according to one of claims 14 to 17, **characterised in that** the pocket filters (42) arranged inside the base body (37) are held in a non-positive and/or positive-locking manner on adjacent support elements (41) via spacer elements (45).

19. The device according to claim 14 or 15, **characterised in that** the supporting element for the at least one pocket filter (42) is formed from individual webs (81) of the water-resistant material, in particular metal webs.

20. The device according to claim 19, **characterised in that** the bottom surface (38) is connected to the top surface (39) of the base body (37) via individual, preferably vertically arranged metal webs (81) which form the supporting element for the at least one pocket filter (42).

21. The device according to one of claims 14 to 20, **characterised in that** each pocket filter (42) has as filter medium at least one inner paper-lay layer (44, 140) facing the contaminated air and at least one non-woven layer (43, 150) cooperating therewith.

22. The device according to one of claims 14 to 21, **characterised in that** the base body (37) is constructed as a straight prism with a square or rectangular base surface and that the inlet side for the contaminated air is associated with an adapter (50) which has cover elements (55, 56) arranged on both sides of the inlet side (8, 80) for contaminated air, which cover elements cover the surfaces located between adjacent filters (7) or filter modules (42).

23. The device according to one of the preceding claims, **characterised in that** a shut-off element (33) which completely or partially closes the outlet opening (52) for purified air is associated with the inner hollow cylinder (35) of the cylindrical holding device (5).

24. The device according to one of the preceding claims, **characterised in that** the supply area (8) for contaminated air forms a painting installation and that the painting installation is arranged above the housing (2) and that the floor area of the painting installation and/or the ceiling area of the housing (2) form respectively forms the supply area (8, 80) for contaminated air.

25. The device according to one of the preceding claims, **characterised in that** at least one sensor for detecting the flow speed, one sensor for detecting the humidity of the purified air and/or one optical sensor is or are associated with the filter (7), the filter arrangement (6, 6a to 6e), the filter module (21) and/or the discharge region for purified air (3).

## Revendications

1. Dispositif pour le filtrage d'air vicié, en particulier pour le filtrage de l'air vicié dans ou provenant d'installations de peinture, avec un carter, qui est doté d'une zone d'amenée pour l'air vicié, d'une zone d'évacuation pour l'air purifié séparée de la zone d'amenée, d'au moins une ouverture accessible de l'extérieur et d'au moins un appareil de retenue cylindrique pour au moins deux ensembles filtres, dans lequel chaque ensemble formant filtre présente au moins un filtre, dans lequel l'appareil de retenue (5) retient de manière amovible par le biais d'éléments de retenue (11) qui y sont agencés les filtres (7) prévus dans les au moins deux ensembles filtre (6, 6a à 6e) et l'appareil de retenue (5) est mobile par rotation entre une première position de fonctionnement et une deuxième position de fonctionnement et inversement, dans lequel dans la première position de fonctionnement du appareil de retenue (5), l'air vicié traverse les filtres (7) des au moins deux ensembles filtre (6, 6a à 6e) et dans lequel dans la deuxième position de fonctionnement du appareil de retenue (5), l'air vicié traverse l'au moins un filtre (7) de l'au moins un ensemble formant filtre (6a à 6e), pendant qu'en même temps l'au moins un filtre (7) chargé d'impuretés filtrées de l'au moins un autre ensemble formant filtre (6) peut être enlevé à travers l'au moins une ouverture (4) accessible de l'extérieure dans le carter (2) et peut être remplacé par au moins un filtre (7) non chargé d'impuretés filtrées, **caractérisé en ce que**
a) la paroi du appareil de retenue (5) cylindrique est réalisée par un cylindre creux intérieur (35) et un cylindre creux extérieur (36) agencé à égale distance de celui-ci,
b) la distance radiale des deux cylindres creux (35, 36) est accordée sur la longueur du filtre (7) respectif de sorte que les filtres (7) sont retenus par l'espace annulaire réalisé entre les deux cylindres creux (35, 36),
c) l'espace annulaire présente des éléments de retenue (11) distribués uniformément sur sa circonférence pour des filtres (7) configurés de façon identique,
d) chaque filtre est doté côté frontal respectivement par rapport au cylindre creux intérieur et extérieur d'une ouverture de passage d'air et les ouvertures de passage d'air sont alignées avec les ouvertures prévues dans l'enveloppe du cylindre creux intérieur (35) et extérieur (36), et
e) l'air purifié est extrait côté pied par le biais du cylindre creux intérieur (35) fermé côté tête ou côté tête par le biais du cylindre creux intérieur (35) fermé côté pied via un ventilateur aspirant générant une faible aspiration lors d'un changement du filtre chargé au moins dans la zone de l'ouverture (4) du carter (2).

2. Dispositif selon la revendication 1, **caractérisé en ce que** l'ouverture (4) accessible de l'extérieur dans le carter (2) est dotée d'un élément de porte (10).

3. Dispositif selon l'une quelconque des revendications 1 ou 2, **caractérisé en ce que** l'appareil de retenue (5) est mobile par rotation de la première position de fonctionnement à la deuxième position de fonctionnement et de la deuxième position de fonctionnement à la première position de fonctionnement et **en ce que** l'appareil de retenue (5) peut être amené dans une troisième position de fonctionnement, dans laquelle l'appareil de retenue est mis en rotation avec une vitesse réglable.

4. Dispositif selon l'une quelconque des revendications 1 à 3, **caractérisé en ce que** l'appareil de retenue (5) est dimensionné et configuré de sorte que l'appareil de retenue (5) présente vu sur sa hauteur au moins un premier ensemble formant filtre (6, 6a à 6e) avec une série de filtres (7) agencés les uns au-dessus des autres et au moins un deuxième ensemble formant filtre (6, 6a à 6e) avec une série de filtres (7) agencés les uns au-dessus des autres.

5. Dispositif selon la revendication 4, **caractérisé en ce que** l'appareil de retenue présente deux à douze ensembles filtre (6, 6a à 6e), de préférence trois à huit ensembles filtre (6, 6a à 6e).

6. Dispositif selon la revendication 4 ou 5, **caractérisé en ce que** chaque ensemble formant filtre (6, 6a à 6e) présente entre un et huit filtres (7), de préférence entre deux à six filtres (7).

7. Dispositif selon l'une quelconque des revendications 4 à 6, **caractérisé en ce que** des filtres (7) situés l'un à côté de l'autre d'ensembles filtre (6, 6a à 6e) prévus l'un à côté de l'autre sont positionnés à la même hauteur.

8. Dispositif selon la revendication 1, **caractérisé en ce que** des éléments de retenue (11) en forme de caisson sont associés à l'espace annulaire, **en ce que** chaque élément de retenue présente une surface de plafond et de plancher fermées, deux surfaces latérales fermées opposées et deux surfaces frontales opposées dotées des ouvertures de passage d'air, dans lequel la surface frontale arquée extérieure est adaptée dans sa courbure à la courbure de la surface d'enveloppe du cylindre creux extérieur (36) et/ou la surface frontale arquée intérieure est adaptée à la courbure de la surface d'enveloppe du cylindre creux intérieur (35).

9. Dispositif selon l'une quelconque des revendications précédentes, **caractérisé en ce que** chaque filtre est réalisé en tant que module de filtre (21) et chaque module de filtre (21) présente une surface de plafond (22) et de plancher (23) fermées, deux surfaces latérales (24) fermées opposées et deux surfaces frontales (25, 26) opposées dotées d'ouvertures de passage d'air, dans lequel la surface frontale arquée extérieure (25) est adaptée dans sa courbure à la courbure de la surface d'enveloppe du cylindre creux extérieur (36) et/ou la surface frontale arquée intérieure (26) est adaptée à la courbure de la surface d'enveloppe du cylindre creux intérieur (35), et **en ce que** chaque module de filtre (21) est retenu par force et/ou complémentarité de forme par les éléments de retenue (11) prévus dans l'espace annulaire.

10. Dispositif selon la revendication 9, **caractérisé en ce que** les surfaces (22 à 24) formant le carter du module de filtre (21) sont réalisées en un matériau réutilisable, de préférence en un plastique.

11. Dispositif selon la revendication 10, **caractérisé en ce que** des éléments de fixation sont prévus pour la retenue amovible d'au moins un agent filtrant (29a, 29b) à l'intérieur du module de filtre (21).

12. Dispositif selon l'une quelconque des revendications 9 à 11, **caractérisé en ce que** différents agents filtrants (29a, 29b) sont agencés à l'intérieur du carter du module de filtre (21).

13. Dispositif selon l'une quelconque des revendications 9 à 12, **caractérisé en ce que** des agents filtrants (29a, 29b) agencés et/ou formés de façon différente sont prévus à l'intérieur du carter du module de filtre (21).

14. Dispositif selon l'une quelconque des revendications précédentes, **caractérisé en ce que** chaque filtre à agencer dans l'appareil de retenue cylindrique est réalisé en tant que module de filtre (21) et présente au moins un filtre à poches (42), **en ce que** chaque filtre à poches (42) présente un corps de base (37) réalisé à partir d'entretoises (81) en un matériau imperméable avec une surface de plancher (38), une surface de plafond (39) et deux surfaces latérales (40) opposées, dans lequel les surfaces latérales (40) sont agencées perpendiculairement à la surface de plancher (38) et de plafond (39) et qu'au moins un élément d'appui (41) est prévu à l'intérieur du corps de base (37) pour la fixation et/ou retenue de l'au moins un filtre à poches (42).

15. Dispositif selon la revendication 14, **caractérisé en ce que** la surface de plancher (38) et la surface de plafond (39) du corps de base (37) est ou sont réalisées courbées en arc au niveau du côté entrée (8, 80) de l'air vicié et/ou au niveau du côté sortie de l'air purifié, dans lequel la courbure arquée au niveau du côté entrée est adaptée à la courbure de l'enveloppe du cylindre creux extérieur (36) et/ou la courbure arquée au niveau du côté sortie est adaptée à la courbure de l'enveloppe du cylindre creux intérieur (35).

16. Dispositif selon la revendication 14 ou 15, **caractérisé en ce que** l'élément d'appui (41) pour le filtre à poches (42) présente une section transversale en forme de U, en forme d'oméga ou en forme de V et est réalisé à partir d'entretoises métalliques.

17. Dispositif selon l'une quelconque des revendications 14 à 16, **caractérisé en ce que** l'élément d'appui (41) est doté d'entretoises métalliques (81) verticales en forme de grille agencées au niveau de la surface de plancher (38) et/ou au niveau de la surface de plafond (39).

18. Dispositif selon l'une quelconque des revendications 14 à 17, **caractérisé en ce que** les filtres à poches (42) agencés à l'intérieur du corps de base (37) sont retenus par force et/ou complémentarité de forme par le biais d'éléments d'écartement (45) au niveau d'éléments d'appui (41) adjacents.

19. Dispositif selon la revendication 14 ou 15, **caractérisé en ce que** l'élément d'appui est réalisé pour l'au moins un filtre à poches (42) à partir de différentes entretoises (81) en matériau imperméable, en particulier à partir d'entretoises métalliques.

20. Dispositif selon la revendication 19, **caractérisé en ce que** la surface de plancher (38) est reliée à la surface de plafond (39) du corps de base (37) par le biais d'entretoises métalliques (81) individuelles, agencées de préférence verticalement, qui réalisent l'élément d'appui pour l'au moins un filtre à poches (42).

21. Dispositif selon l'une quelconque des revendications 14 à 20, **caractérisé en ce que** chaque filtre à poches (42) présente en tant qu'agent filtrant au moins une couche en nappe de papier (44, 140) intérieure pointant vers l'air vicié et au moins une couche de non-tissé (43, 150) coopérant avec celle-ci.

22. Dispositif selon l'une quelconque des revendications 14 à 21, **caractérisé en ce que** le corps de base (37) est réalisé en tant que prisme droit avec une surface de base rectangulaire ou carrée et **en ce qu'**un adaptateur (50) est associé au côté entrée pour l'air vicié, qui présente des deux côtés du côté entrée (8, 80) des éléments de recouvrement (55, 56) agencés pour air vicié, qui recouvrent les surfaces se trouvant entre des filtres (7) ou modules de filtre (42) adjacents.

23. Dispositif selon l'une quelconque des revendications précédentes, **caractérisé en ce qu'**un élément de verrouillage (33) fermant complètement ou partiellement l'ouverture de sortie (52) pour air purifié est associé au cylindre creux intérieur (35) de l'appareil de retenue (5) cylindrique.

24. Dispositif selon l'une quelconque des revendications précédentes, **caractérisé en ce que** la zone d'amenée (8) pour air vicié forme une installation de peinture et **en ce que** l'installation de peinture est agencée au-dessus du carter (2) et **en ce que** la zone de plancher de l'installation de peinture et/ou la zone de plafond du carter (2) réalisent la zone d'amenée (8, 80) pour air vicié.

25. Dispositif selon l'une quelconque des revendications précédentes, **caractérisé en ce qu'**au moins un capteur pour la détection de la vitesse d'écoulement, un capteur pour la détection de l'humidité de l'air purifié et/ou un capteur optique est ou sont associé(s) au filtre (7), à l'ensemble formant filtre (6, 6a à 6e), au module de filtre (21) et/ou à la zone d'évacuation pour air purifié (3).
